(19) Europäisches Patentamt
European Patent Office
Office européen des brevets

(11) **EP 2 525 238 B1**

(12) **EUROPEAN PATENT SPECIFICATION**

(45) Date of publication and mention
of the grant of the patent:
**07.12.2016 Bulletin 2016/49**

(51) Int Cl.:
*G01S 11/00* (2006.01)     *G01S 11/14* (2006.01)
*G01P 3/64* (2006.01)     *G01S 11/08* (2006.01)
*G01S 11/10* (2006.01)

(21) Application number: **11732958.1**

(22) Date of filing: **14.01.2011**

(86) International application number:
**PCT/JP2011/050551**

(87) International publication number:
**WO 2011/087088 (21.07.2011 Gazette 2011/29)**

(54) **VELOCITY/DISTANCE DETECTION SYSTEM, VELOCITY/DISTANCE DETECTION APPARATUS, AND VELOCITY/DISTANCE DETECTION METHOD**

GESCHWINDIGKEITS-/ABSTANDSERKENNUNGSSYSTEM, GESCHWINDIGKEITS-/ABSTANDSERKENNUNGSVORRICHTUNG UND GESCHWINDIGKEITS-/ABSTANDSERKENNUNGSVERFAHREN

SYSTÈME DE DÉTECTION DE VITESSE/DISTANCE, APPAREIL DE DÉTECTION DE VITESSE/DISTANCE ET PROCÉDÉ DE DÉTECTION DE VITESSE/DISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2010 JP 2010007492**

(43) Date of publication of application:
**21.11.2012 Bulletin 2012/47**

(73) Proprietor: **Inter-University Research Institute Corporation Research Organization of Information and Systems Tokyo 191-0014 (JP)**

(72) Inventors:
• **HASHIZUME, Hiromichi**
**Tokyo 101-8430 (JP)**
• **SUGIMOTO, Masanori**
**Tokyo 113-8654 (JP)**
• **SATO, Tomohiko**
**Tokyo 113-8654 (JP)**

(74) Representative: **Maury, Richard Philip Marks & Clerk LLP 90 Long Acre London WC2E 9RA (GB)**

(56) References cited:
**WO-A1-2006/112475**     **GB-A- 2 441 667**

• **TETSUYA SATO ET AL: "An Extension Method of Phase Accordance Method for Accurate Ultrasonic Localization of Moving Node", THE TRANSACTIONS OF THE INSTITUTE OF ELECTRONICS, INFORMATION AND COMMUNICATION ENGINEERS, JP, vol. J92-A, no. 12, 1 December 2009 (2009-12-01), pages 953-963, XP008171305,**
• **TETSUYA SATO: 'An Extension Method of Phase Accordance Method for Accurate Ultrasonic Localization of Moving Node' THE TRANSACTIONS OF THE INSTITUTE OF ELECTRONICS, INFORMATION AND COMMUNICATION ENGINEERS vol. J92-A, no. 12, 01 December 2009, pages 953 - 963, XP008171305**

**Description**

Field

The present invention relates to a velocity/distance detection system, a velocity/distance detection apparatus, and a velocity/distance detection method, and more particularly to a velocity/distance detection system, a velocity/distance detection apparatus, and a velocity/distance detection method that can measure a velocity and a distance of a moving body highly precisely with a small operation amount and in a short time, based on a received signal with the Doppler shift and propagation delay.

Background

For example, a technique of measuring a coordinate position of an object with high precision such as a GPS and motion tracking can be widely applied in various industrial fields. A fundamental element of a two-dimensional or three-dimensional coordinate positioning system is distance measurement between two points, and a method of obtaining a distance by measuring propagation delay of sound and electromagnetic waves and multiplying the propagation delay by a signal propagation speed has been widely used. For example, the global positioning system (GPS) uses this principle. In the case of using this principle, when a relative velocity of a transmitter and a receiver can be ascertained in addition to the distance, applications such as determining a more precise position and precisely interpolating and predicting a route of a moving object become possible by performing a calculation in view of velocity information in addition to distance information.

As distance measurement, there is a well-known method in which a carrier burst is transmitted and a receiver detects an envelope line of the carrier burst to detect a burst start point and obtain propagation delay, which is converted to a distance. However, this method is strongly affected by existing field noise, and if this method is used in a transmission medium having a narrow transmission band, the envelope line waveform is deformed largely, thereby causing a problem in that a burst start timing becomes uncertain. This leads to a deterioration of position detecting performance, and therefore such a method is used only for simple applications which do not require high precision.

In the GPS or the like, a satellite modulates a carrier wave by another signal, then the receiver extracts a phase of the modulation signal, and determines propagation delay at that timing, thereby obtaining high distance measuring precision. Generally, however, there is a disadvantage that a relatively long reception time is required for phase detection of a modulation wave. The GPS requires continuous signal reception for at least several to several tens of seconds since the start of the signal reception until the synchronization is achieved. Therefore, it is not suitable when distance detection is required to be performed within a short time.

For velocity measurement, there are two methods, which are (1) a method of regularly performing positioning measurement to calculate a velocity from a moving distance in a certain period of time, and (2) a method of measuring a physical quantity directly relates to velocity to calculate the velocity independently of a position. For the correction of position information by velocity information it is desired to obtain the velocity information independently from the poison information. Furthermore, it is more useful if the velocity measurement can be completed with high precision and within a short time, which can be regarded as instantaneous in view of the moving velocity.

Conventionally, as velocity measurement using the Doppler shift, a Doppler radar using a millimeter-wave and an electromagnetic wave and an echo diagnostic device for medical use can be mentioned. These devices have a precision of about 1/100 of a velocity measuring range, and a strict velocity of a certain point of an object in a visual field cannot be measured in non-contact manner.

In a comparator for velocity measurement using airborne ultrasound, an ultrasonic anemometer for weather monitoring has been practically used. The measured velocity thereof is the average velocity in from 10 to 100 milliseconds timeframe, and it can be hardly said that the velocity is obtained instantaneously in view of an object moving several meters per second such as a walking human.

When an ultrasonic wave is received by a microphone and converted to an electric signal, Doppler velocity detection is equivalent to precise frequency measurement of an electric signal. There have been known various frequency measuring methods of the electric signal. For example, when gate signals of 1/1000 second interval are generated, and how many times waveform-rising zero cross of a received signal occurs during this time interval is counted, the counted value can be read as the signal frequency in kHz.

However, according to such a method, for example, when rising zero crosses of a 40.0 kHz signal is measured 40 times, or 41 times according to the phase relationship between the gate signal and the received signal, and the measured frequency includes an error (uncertainty) of from -0 to +1 kHz with respect to the true value of 40 kHz. This becomes a velocity measuring error of about 8500 mm/s, when considered in view of a typical sound propagation velocity of 340,000 mm/s in the 25°C atmosphere, which is unsatisfactory for many application requests.

When the gate time is set to 1 second (a thousand times longer), the precision also improves a thousand times, that is 8.5 mm/s, which may satisfy measuring precision requirements for many applications. However, the measurement latency in this case becomes 1 second. This is insufficient when it is needed to know the velocity at a specific time (an instantaneous value) for tracking the movement.

The frequency measuring method also includes a method in which the time for one to several cycles of rising zero cross of a received signal is designated as a gate signal, and known frequency pulses as high as 100 MHz are counted during this period, and obtains a frequency by taking a reciprocal number thereof. However, as it is a case in general, when white noise is superimposed on a received signal, the time of occurrence of zero cross is unstable when observed in a fine time resolution, and it is difficult to measure the Doppler shift with desired precision.

Furthermore, it is possible to know a frequency based on a sweeping time by sweeping a local oscillation frequency with respect to a received signal, converting the swept frequency by frequency mixing, and detecting it via a high precision filter. However, because a sharp filter has a long group delay time for passage of a signal, the measuring time required by this method becomes long. In addition, when frequency sweeping is performed at a high velocity for high-velocity measurement, it means that a received signal is frequency-modulated, which makes the measurement uncertain, thereby decreasing the precision of the measurement. Therefore, by these methods, Doppler shift measurement for detecting the velocity of an object cannot be performed with high precision and within a short time at the same time.

When a transmission frequency bandwidth is also restricted under an environment with existing field noise, the present applicants have proposed a method described in Patent Literature 1 as a method of measuring a distance with high precision even in a short measurement time. In Patent Literature 1, a method referred to as "phase accordance method" is used. In this method, an ultrasonic wave of composite frequency carriers obtained by simultaneously superimposing carriers of two or more frequency carriers relatively close to each other is transmitted by a transmitter, the ultrasonic wave is received by a receiver to calculate propagation delay based on a time at which phases of respective carriers have a specific relationship. According to this method, it has been confirmed that when measurement is performed by using airborne ultrasound of 40 kHz, a distance measurement error falls within 1 mm. In addition, a signal reception time required for measurement is about 1 ms.

However, in Patent Literature 1, there are problems in that a strict frequency of a received signal needs to be known in advance, and when a transmitter and a receiver move to change the mutual distance and carriers are received with the Doppler shift, a distance measurement error increases. Furthermore, according to the method of Patent Literature 1, the relative velocity of a transmitter and a receiver cannot be obtained.

The present applicants have released Non Patent Literature 1 as a method of detecting the Doppler shift from a short carrier burst under an environment with exogenous noise to calculate a relative velocity of a transmitter and a receiver.

In Non Patent Literature 1, it has been confirmed that measuring precision of about $\pm 10$ mm/s can be obtained by measuring a velocity of a moving object of about a human walking velocity (about 1 m/s) by using an ultrasonic wave. However, because disclosed in Non Patent Literature 1 is a velocity measuring method, positioning measurement needs to be performed by using a separate waveform at a different time. Therefore, the distance and velocity cannot be measured strictly simultaneously (in a short time).

Furthermore, as a method of measuring a distance and a velocity simultaneously (in a short time), the present applicants have filed Japanese Patent Application No. 2009-272707 (unpublished at the time of filing of the present application), which discloses a method of measuring a distance and a velocity simultaneously (in a short time) by using a beat wave obtained by superimposing composite frequency carriers of two or more frequencies similarly to Patent Literature 1. In Japanese Patent Application No. 2009-272707, a position and a velocity of an object can be measured simultaneously (in a short time). However, distance measurement is performed by applying a method when a received frequency is already known. Therefore, operation data needs to be re-prepared based on each velocity measurement value to perform distance measurement. Consequently, an operation amount increases, and therefore this method is not suitable when high-velocity repetitive measurement is performed.

Citation List

Patent Literature

Patent Literature 1: International Publication No. WO2006/112475

Non Patent Literature

Non Patent Literature 1: SATO Tetsuya, SUGIMOTO Masanori, HASHIZUME Hiromichi, "An Extension Method of Phase Accordance Method for Accurate Ultrasonic Localization of Moving Node", IEICE Transactions, vol. J92-A, No. 12, December 2009

Summary

Technical Problem

The present invention has been achieved to solve the above problems, and an object of the present invention is to provide a velocity/distance detection system, a velocity/distance detection apparatus, and a velocity/distance detection method that can measure a velocity and a distance of a moving object highly precisely with a small operation amount and in a short time. Solution to Problem

To achieve the above objectives, the invention is in the system of Claim 1, the apparatus of Claim 5 and the method of Claim 9.

Advantageous Effects of Invention

According to the present invention, in the velocity/distance detection system that includes a transmitter and a receiver and detects a distance between the transmitter and the receiver, the transmitter transmits a composite frequency signal. The receiver includes a receiving unit that receives the composite frequency signal transmitted from the transmitter, an operating unit that performs an operation so that a difference in plural power estimate values or amplitude estimate values becomes target precision, a velocity estimating unit that estimates a velocity when the difference becomes the target precision as a velocity of the transmitter or the receiver, and a distance estimating unit that extracts each phase of the plural frequency signals when the difference becomes the target precision, calculates a propagation delay time of the composite frequency signal between the transmitter and the receiver based on each extracted phase, and estimates a distance between the transmitter and the receiver based on the calculated propagation delay time. Accordingly, a velocity/distance detection system that can measure a velocity and distance of a moving body highly precisely with a small operation amount and in a short time can be provided.

According to the present invention, the transmitter determines a time reference point at which respective phases of the frequency signals are in a predetermined relationship based on the plural frequency signals, and transmits the composite frequency signal obtained by combining plural frequency signals after the respective phases of the frequency signals are adjusted based on the determined time reference point. The receiver further includes a complex-output calculating unit that performs quadrature detection of the composite frequency signal received by the receiving unit with the Doppler effect and propagation delay by reference angular frequencies of at least the same number as that of the frequency signals, and calculates complex outputs for the number of the reference angular frequencies based on a detection output thereof. The operating unit calculates a velocity or a received angular frequency at which the difference in power estimate values or amplitude estimate values for the number of the reference angular frequencies based on the complex outputs for the number of the reference angular frequencies becomes the target precision. The distance estimating unit extracts each phase of the plural frequency signals from the complex outputs for the number of the reference angular frequencies when the difference becomes the target precision, calculates a propagation delay time of the composite frequency signal between the transmitter and the receiver based on each extracted phase, and estimates a distance between the transmitter and the receiver based on the calculated propagation delay time. Accordingly, a velocity/distance detection system that can measure a velocity and distance of a moving body highly precisely with a small operation amount and in a short time can be provided.

According to an embodiment of the present invention, because the transmitter and the receiver synchronize an internal clock thereof in advance by using a predetermined time synchronizing method, the propagation delay time can be calculated by a simple operation.

According to an embodiment of the present invention, when calculating a velocity or a received angular frequency at which the difference in power estimate values or amplitude estimate values for the number of the reference angular frequencies becomes target precision, the operating unit adds correction corresponding to a frequency characteristic of a receiving element and a velocity range of the transmitter. Accordingly, the difference in power estimate values or amplitude estimate values can be calculated highly precisely.

According to an embodiment of the present invention, the receiving unit receives a signal output from the transmitter in a form of any one of an ultrasonic wave, an electromagnetic wave, and modulated light. Therefore, the present invention can be applied to what can be expressed by a general wave equation.

Brief Description of Drawings

FIG. 1 is a conceptual diagram of a configuration example of a measuring system according to the present invention.
FIG. 2 is a flowchart for explaining an outline of a velocity/distance detection method according to the present invention.

FIG. 3 is an explanatory diagram of an example of defining a time reference point.

FIG. 4 is an example of a composite frequency beat waveform.

FIG. 5 is an explanatory diagram of a frequency (velocity) estimation by power of a composite frequency beat signal.

FIG. 6A is an example of a result of a velocity estimate simulation.

FIG. 6B is an example of a result of a velocity estimate simulation.

FIG. 7A is an example of an evaluation test result of a velocity estimation.

FIG. 7B is an example of an evaluation test result of a velocity estimation.

FIG. 8A is an example of an evaluation test result of a velocity estimation.

FIG. 8B is an example of an evaluation test result of a velocity estimation.

FIG. 9 is a schematic configuration example of a transmitter in FIG. 1.

FIG. 10 is a schematic configuration example of a receiver in FIG. 1.

FIG. 11A is a flowchart for explaining a process of calculating a velocity $v_r$ of the transmitter by an estimating unit in FIG. 10 (part 1).

FIG. 11B is a flowchart for explaining a process of calculating the velocity $v_r$ of the transmitter by the estimating unit in FIG. 10 (part 2).

FIG. 12A is an explanatory diagram of an application example of the present invention.

FIG. 12B is an explanatory diagram of the application example of the present invention.

Description of Embodiments

Exemplary embodiments of a measuring system to which a velocity/distance detection system, a velocity/distance detection apparatus, and a velocity/distance detection method according to the present invention are applied will be explained below in detail with reference to the accompanying drawings. The present invention is not limited the embodiments. A time reference point information transmitting system and a receiver is disclosed in International Publication No. WO2006/112475 (Japanese Patent Application No. 2007-528168). While the present invention is also applicable to what can be expressed by a general wave equation such as an ultrasonic wave, an electromagnetic wave, and modulated light, an ultrasonic wave is exemplified and explained below. The velocity/distance detection system, the velocity/distance detection apparatus, and the velocity/distance detection method according to the present invention can be realized by a hardware module, a software module, or a combination thereof. For example, portions described by processes shown in flowcharts or configuration diagrams described below can be realized by hardware, software, or a combination thereof.

(Principle of the present invention)

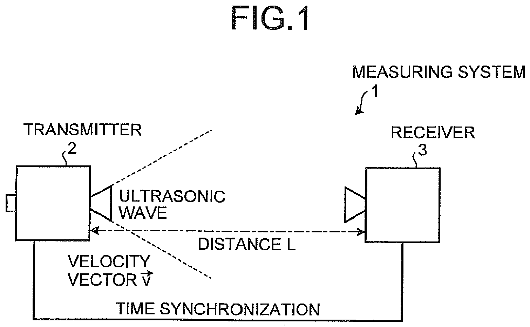

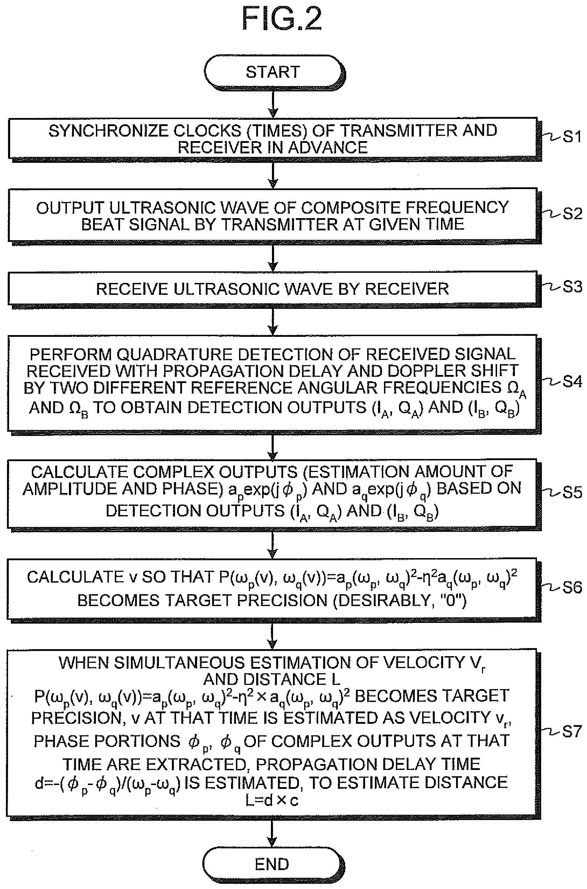

A principle of the velocity/distance detection method according to the present invention is explained first with reference to FIGS. 1 to 7. FIG. 1 is a conceptual diagram of a schematic configuration of a measuring system according to the present invention, and FIG. 2 is a flowchart for explaining an outline of the velocity/distance detection method according to the present invention.

An outline of the Doppler effect is explained first. In FIG. 1, a measuring system 1 includes a transmitter 2 that transmits an ultrasonic wave, and a receiver 3 that receives the ultrasonic wave and constitutes a velocity/distance detection apparatus. The transmitter 2 and the receiver 3 are time synchronized. A propagation delay time d of the ultrasonic wave between the transmitter 2 and the receiver 3 is measured, and the propagation delay time d is multiplied by a sound velocity c in the air, thereby enabling to obtain a distance L between an object having the transmitter 2 mounted thereon and an object having the receiver 3 mounted thereon.

A motion velocity of the transmitter 2 or the receiver 3 can be obtained by detecting a difference between a reception angular frequency $\omega_r$ and a transmission angular frequency $\omega_t$ of the ultrasonic wave. For example, in a state where only the transmitter 2 is moving at a velocity v, assuming that the air and the receiver 3 remain stationary, the transmission angular frequency $\omega_t$ of the ultrasonic wave transmitted from the transmitter 2 is measured by the receiver 3 as a reception angular frequency $\omega_r$ at a different frequency. The transmission angular frequency $\omega_t$ and the reception angular frequency $\omega_r$ have a relationship as represented by the following Equation (1). In Equation (1), $\omega = 2\pi f$, where f denotes a general frequency.

$$\omega_r = (c / (c - v)) \omega_t \qquad\qquad (1)$$

where a positive direction of v is chosen as the direction approaching the receiver 3.

This is a well-known phenomenon as the Doppler effect, and this frequency shift is referred to as "Doppler shift". Although a slightly different relational expression is used when the receiver 3 is moving or a medium of a sound wave is also moving, a state where the frequency shift occurs is commonly observed. For simplifying explanations, unless otherwise specified, a case where only the transmitter 2 is moving and the medium of the sound wave and the receiver 3 are static is explained below.

When the transmission angular frequency $\omega_t$ is already known, and if it is possible to know the reception angular frequency $\omega_r$, the velocity v of the transmitter 2 can be expressed by the following Equation (2) based on the relational expression of the above Equation (1).

$$v=c\,(1-\omega_t/\omega_r) \tag{2}$$

Because the sound velocity c under an environment of specific temperature, humidity, and atmospheric pressure has been known well, the reception angular frequency $\omega_r$ needs only to be detected highly precisely in order to perform velocity measurement based on the above Equation (2) with high precision. To obtain an instantaneous velocity of a moving object, it is desired that frequency detection be performed within a time as short as possible.

By performing the above measurement at least twice with respect to one abject to be measured, a two-dimensional position and a two-dimensional velocity vector of the object can be obtained. By performing the above measurement at least three times with respect to one abject to be measured, a three-dimensional position and a three-dimensional velocity vector of the object can be obtained. When this measurement is performed with respect to one transmitter pulse, strictly simultaneous measurement of the velocity and distance can be performed.

A method of detecting the velocity and distance highly precisely and simultaneously (in a short time) with a small operation amount according to the velocity/distance detection method of the present invention is explained below. The velocity/distance detection method of the measuring system shown in FIG. 1 is explained with reference to the flowchart in FIG. 2.

In FIG. 2, clocks (times) of the transmitter 2 and the receiver 3 are synchronized in advance (step S1). As a method of synchronizing the clocks (times) of the transmitter 2 and the receiver 3, for example, a method described in Japanese Patent No. 4041899 of the present applicants can be used. The transmitter 2 transmits an ultrasonic wave of a composite frequency beat signal (composite frequency signal) at a given time in order to measure the propagation delay time d (step S2). To measure the propagation delay time d, in a measurement by the ultrasonic wave as described in International publication No. WO2006/112475, a measurement timing is converted to an electric or optical signal and transmitted from the transmitter 2 to the receiver 3 separately, or the transmitter 2 can generate a measurement waveform in response to an instruction by an electric signal or the like from the receiver 3.

Such a composite frequency beat signal is obtained by determining a time point at which phases of the respective frequency signals are in a predetermined relationship based on the plural frequency signals, defining the determined time point as a time reference point, adjusting the phases of the respective frequency signals based on the defined time reference point, and then combining the plural frequency signals.

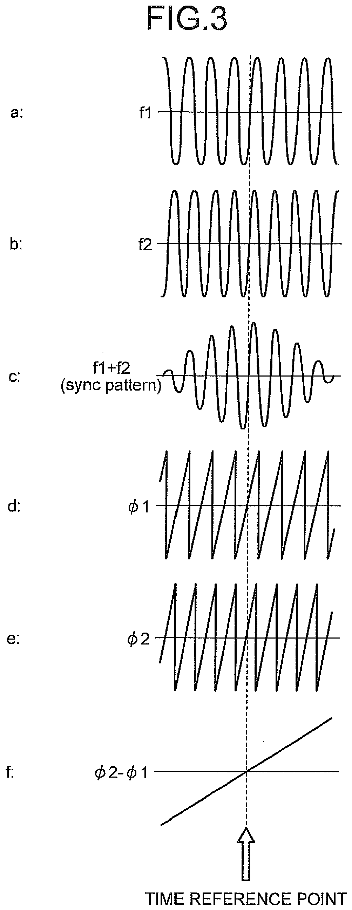

FIG. 3 is an explanatory diagram of a definition example of the time reference point. FIG. 3 is an example when two frequency signals (frequency $f_1$=39.75 kHz, frequency $f_2$=40.25 kHz) are generated. When two frequency carriers (a and b in FIG. 3) are transmitted in superimposition, beat is generated (c in FIG. 3). In this case, the cycle period of the beat is determined by the inverse of the frequency difference of "$f_2-f_1$=0.5 kHz", that is, 2 ms. Note that a phase $\varphi_1$ of the carrier of the frequency $f_1$ and a phase $\varphi_2$ of the carrier of the frequency $f_2$. When 2 ms as the time from a node to a node of the beat are extracted, the phase $\varphi_1$ and the phase $\varphi_2$ are reciprocated many times between $-\pi$ radian and $\pi$ radian (d and e in FIG. 3). The phase difference "$\varphi_2-\varphi_1$" passes only once in the range of $-\pi$ radian to n radian, and the timing (time) when "$\varphi_2-\varphi_1$=0" occurs only once during the extracted 2 ms (f in Fig. 2). The timing when "$\varphi_2-\varphi_1$=0" occurs is defined as the time reference point.

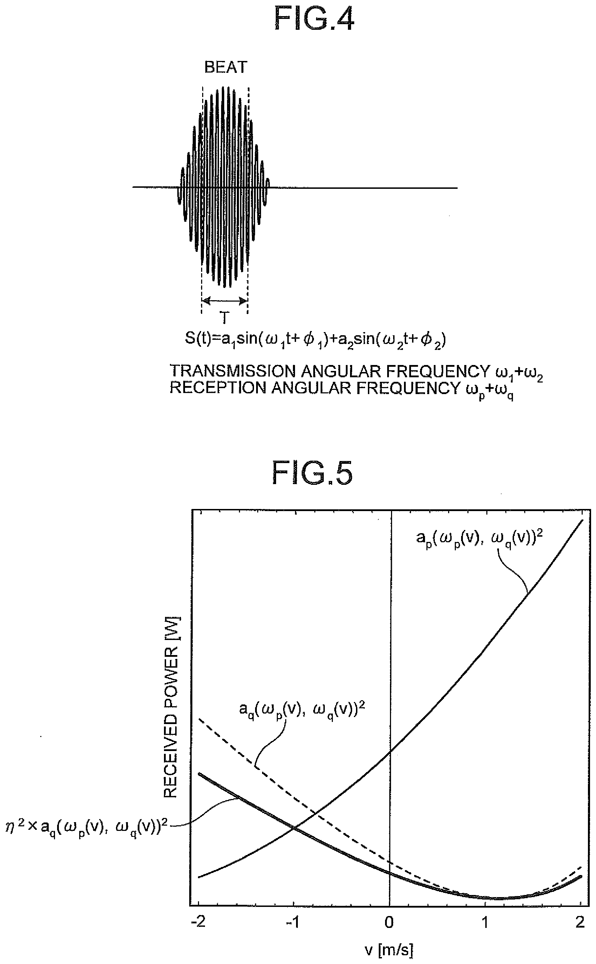

FIG. 4 is an example of a combined composite frequency beat waveform. The composite frequency beat waveform shown in FIG. 4 is a two-frequency beat signal combining waveforms of two adjacent frequencies. A waveform same as the two-frequency beat signal to be used for distance measurement is used to determine phases, amplitudes, and frequency shift of two carriers of the beat, and the position and the velocity are simultaneously measured. The composite frequency beat signal can be expressed by, for example, the following Equation (3).

$$s(t)=a_1\sin(\omega_1 t+\varphi_1)+a_2\sin(\omega_2 t+\varphi_2) \tag{3}$$

In Equation (3), $a_1$, $a_2$, $\omega_1$, $\omega_2$, $\varphi_1$, and $\varphi_2$ are, respectively, amplitudes, angular frequencies, and initial phases of the signal, in which $\omega_1$, $\omega_2$ are angular frequencies adjacent to each other, and it can be, for example, $\omega_1=2\pi\times39.750$

kHz and $\omega_2 = {}_2\pi \times 40.250$ kHz. The transmission wave can be generated as a spherical wave having a constant expanse from the transmitter 2, and can be detected by placing and fixing the receiver 3 in a transmit aperture. The time from a node to a node of the beat is determined based on a difference frequency, and in this example, 1/(40.250-39.750) kHz =2 ms. The two-frequency beat signal has a single phase coincidence point of two original carriers referred to as "time reference point", and the phase coincidence point becomes a reference point of a receipt time used by distance measurement. The moving transmitter 2 transmits a waveform from a node to a node, or a part thereof as a composite frequency beat signal of a single wave packet.

The composite frequency beat signal transmitted from the transmitter 2 is received as a signal expressed by the following Equation (4) by the receiver 3, with propagation delay and the Doppler effect (step S3).

$$u(t)=a_p\sin(\omega_p t+\varphi_p)+a_q\sin(\omega_q t+\varphi_q) \qquad (4)$$

The received waveform undergoes the Doppler shift due to the velocity v of the transmitter 2, and $\omega_1$ shifts to $\omega_p = (c/(c-v))\omega_1$, and $\omega_2$ shifts to $\omega_q = (c/(c-v))\omega_2$, where c is a sound velocity at the time of performing the measurement, and v is a component of a velocity vector of a moving object in a direction toward the receiver 3 (when it is assumed that the velocity vector of the transmitter 2 is $v\rightarrow$ and a vector of a unit length from the transmitter 2 to a direction toward the receiver 3 is $r\rightarrow$, $v=v\rightarrow\cdot r\rightarrow$). In the received waveform, the phase $\varphi_1$ shifts to $\varphi_p$, and $\varphi_2$ shifts to $\varphi_q$ due to the propagation delay. While the amplitude is expected to be $a_p=a_q$ when $a_1=a_2$, if transmitting and receiving elements have an amplitude-frequency characteristic, the amplitude may fluctuate and a correction needs to be performed.

When the received signal (Equation (4)) is cut out by applying a rectangular window having a window width of T (t=0 indicates the center of the window), and quadrature detection is performed by using a complex sinusoidal wave $\exp(j\Omega_A t)$ of a reference angular frequency $\Omega_A$ $(=2\pi\times39.75$ kHz), detection outputs of a real part $I_A$ and an imaginary part $Q_A$ can be obtained (step S4). Similarly, when quadrature detection is performed by using another reference angular frequency $\Omega_B=2\pi\times40.25$ kHz, detection outputs of a real part $I_B$ and an imaginary part $Q_B$ can be obtained. Detection outputs $(I_A, Q_A)$ and $(I_B, Q_B)$ can be expressed by the following Equation (5).

$$I_A=(1/2)\cdot\{\mathrm{sinc}(\omega_p-\Omega_A)\cdot(T/2)+\mathrm{sinc}(\omega_p+\Omega_A)\cdot(T/2)\}\cdot a_p\sin\varphi_p+(1/2)\cdot\{\mathrm{sinc}(\omega_q-\Omega_A)\cdot(T/2)+\mathrm{sinc}(\omega_q+\Omega_A)\cdot(T/2)\}\cdot a_q\sin\varphi_q$$

$$\equiv r_A(\omega_p)a_p\sin\varphi_p+r_A(\omega_q)a_q\sin\varphi_q$$

$$Q_A=(1/2)\cdot\{-\mathrm{sinc}(\omega_p-\Omega_A)\cdot(T/2)+\mathrm{sinc}(\omega_p+\Omega_A)\cdot(T/2)\}\cdot a_p\cos\varphi_p+(1/2)\cdot\{-\mathrm{sinc}(\omega_q-\Omega_A)\cdot(T/2)+\mathrm{sinc}(\omega_q+\Omega_A)\cdot(T/2)\}\cdot a_q\cos\varphi_q$$

$$\equiv i_A(\omega_p)a_p\cos\varphi_p+i_A(\omega_q)a_q\cos\varphi_q$$

$$I_B=(1/2)\cdot\{\mathrm{sinc}(\omega_p-\Omega_B)\cdot(T/2)+\mathrm{sinc}(\omega_p+\Omega_B)\cdot(T/2)\}\cdot a_p\sin\varphi_p+(1/2)\cdot\{\mathrm{sinc}(\omega_q-\Omega_B)\cdot(T/2)+\mathrm{sinc}(\omega_q+\Omega_B)\cdot(T/2)\}\cdot a_q\sin\varphi_q$$

$$\equiv r_B(\omega_p)a_p\sin\varphi_p+r_B(\omega_q)a_q\sin\varphi_q$$

$$Q_B=(1/2)\cdot\{-\mathrm{sinc}(\omega_p-\Omega_B)\cdot(T/2)+\mathrm{sinc}(\omega_p+\Omega_B)\cdot(T/2)\}\cdot a_p\cos\varphi_p+(1/2)\cdot\{-\mathrm{sinc}(\omega_q-\Omega_B)\cdot(T/2)+\mathrm{sinc}(\omega_q+\Omega_B)\cdot(T/2)\}\cdot a_q\cos\varphi_q$$

$$\equiv i_B(\omega_p)a_p\cos\varphi_p+i_B(\omega_q)a_q\cos\varphi_q \qquad (5),$$

In Equation (5), sinc denotes sampling function.

Next, complex outputs (estimation amount of amplitude and phase) $a_p\exp(j\varphi_p)$ and $a_q\exp(j\varphi_q)$ are calculated based on the detection outputs $(I_A, Q_A)$ and $(I_B, Q_B)$ of the above Equation (5) (step S5). Specifically, in Equation (5),

$a_p$, $a_q$, $\varphi_p$, and $\varphi_q$ are amounts that do not depend on how to calculate the reference angular frequencies $Q_A$ and $Q_B$, and can be expressed by complex outputs as represented by the following Equations (6) and (7), by regarding these four equations as simultaneous equations and solving these equations.

$$a_p \exp(j\varphi_p) = (i_B(\omega_q)Q_A - i_A(\omega_q)Q_B) / (i_A(\omega_p)i_B(\omega_q) -$$
$$i_A(\omega_q)i_B(\omega_p)) + j(r_B(\omega_q)I_A - r_A(\omega_q)I_B) / (r_A(\omega_p)r_B(\omega_q) - r_A(\omega_q)r_B(\omega_p))$$
$$\tag{6}$$

$$a_q \exp(j\varphi_q) = (-i_B(\omega_p)Q_A + i_A(\omega_p)Q_B) / (i_A(\omega_p)i_B(\omega_q) -$$
$$i_A(\omega_q)i_B(\omega_p)) + j(-r_B(\omega_p)I_A + r_A(\omega_p)I_B) / (r_A(\omega_p)r_B(\omega_q) - r_A(\omega_q)r_B(\omega_p))$$
$$\tag{7}$$

The present invention uses the complex outputs $a_p \exp(j\varphi_p)$ and $a_q \exp(j\varphi_q)$ to calculate a velocity $v_r$ based on a condition of $a_p{}^2 = a_q{}^2$, and calculate the distance L based on $\varphi_p - \varphi_q$, thereby realizing simultaneous measurement of the velocity and distance with a small operation amount.

In the above Equations (6) and (7), the angular frequencies $\omega_p$, $\omega_q$, which are unknown numbers, are converted to the velocity v by the above Doppler Equation (2) by using the already known original angular frequencies $\omega_1$, $\omega_2$. Accordingly, the right side of Equations (6) and (7) can be expressed as a function of only the velocity v. Received powers $a_p(\omega_p(v),\omega_q(v))^2$ and $a_q(\omega_p(v),\omega_q(v))^2$ in the following Equations (8) and (9) can be obtained based on the complex outputs of Equations (6) and (7). Note that functions in these Equations are expressed by $\omega_p \rightarrow \omega_p(v)$ and $\omega_q \rightarrow \omega_q(v)$ with the variable transformation from a frequency to a velocity.

$$a_p{}^2 = (i_B(\omega_q(v))Q_A - i_A(\omega_q(v))Q_B) / (i_A(\omega_p(v))i_B(\omega_q(v)) -$$
$$i_A(\omega_q(v))i_B(\omega_p(v))) + (r_B(\omega_q(v))I_A -$$
$$r_A(\omega_q(v))I_B) / (r_A(\omega_p(v))r_B(\omega_q(v)) -$$
$$r_A(\omega_q(v))r_B(\omega_p(v))) \equiv a_p(\omega_p(v),\omega_q(v))^2 \tag{8}$$

$$a_q{}^2 = (-i_B(\omega_p(v))Q_A + i_A(\omega_p(v))Q_B) / (i_A(\omega_p(v))i_B(\omega_q(v)) -$$
$$i_A(\omega_q(v))i_B(\omega_p(v))) + (-$$
$$r_B(\omega_p(v))I_A + r_A(\omega_p(v))I_B) / (r_A(\omega_p(v))r_B(\omega_q(v)) -$$
$$r_A(\omega_q(v))r_B(\omega_p(v))) \equiv a_q(\omega_p(v),\omega_q(v))^2 \tag{9}$$

The left side of Equations (8) and (9) represents received power of a certain value. On the other hand, the right side thereof is a function of power defined by assuming that the moving velocity of the transmitter 2 is v. When Equations (8) and (9) are assumed as simultaneous equations, the unknown numbers are $a_p(\omega_p(v),\omega_q(v))^2$, $a_q(\omega_p(v),\omega_q(v))^2$, and the velocity v. Because simultaneous equations can be solved when a reception amplitude is uniformly $a_p = a_q$, the velocity $v_r$ of the transmitter 2 can be obtained as a solution of the following Equation (10).

$$a_p(\omega_p(v),\omega_q(v))^2 = a_q(\omega_p(v),\omega_q(v))^2 | v=v_r \tag{10}$$

On the other hand, under an actual environment, even if the amplitude is set to $a_p = a_q$ at the time of transmitting a transmission waveform, the amplitude becomes $a_p \neq a_q$ at the time of reception according to an amplitude-frequency characteristic of a receiving sensor. However, because the mismatch of the amplitude can be solved if a frequency characteristic of the sensor is previously known, $v_r$ can be determined even under the actual environment.

The amplitudes $a_p$ and $a_q$ of the received signal are generally unknown numbers. However, when the amplitudes $a_p$ and $a_q$ are equalized by the original transmitted signal, a ratio $\eta(v) = a_p/a_q$ thereof is a function determined by the individual frequency characteristic of the receiving element and the velocity v of the transmitter 2. Therefore, in a condition where the velocity is slow, it has been experimentally known that $\eta(v)$ does not change so much for typical receiving elements, and therefore it can be regarded as a constant $\eta(v)=\eta$. The above Equation (10) can be rewritten by the following Equation (11), thereby enabling to obtain the moving velocity $V_r$ of the transmitter 2 under the actual environment. Because this equation cannot be solved analytically, $V_r$ is determined numerically. To solve this equation, for example, binary chop algorithm can be used.

$$a_p(\omega_p(v),\omega_q(v))^2=\eta^2\times a_q(\omega_p(v),\omega_q(v))^2\,|\,v=v_r \qquad (11)$$

When fluctuation due to the velocity of $\eta(v)$ cannot be ignored, it is first assumed that $v=0$, and $\eta0=\eta(0)$ is used to obtain a velocity estimate value v1 according to the method of bisection. Next, $\eta1=\eta(v1)$ is used to obtain a velocity estimate value v2, and this procedure is repeated. By repeating this procedure until a change $|v\_n-v\_(n-1)|$ of the velocity estimate value becomes sufficiently small, a highly precise velocity estimate value can be obtained.

The velocity/distance detection method of the present invention uses a fact that the received power $a_p(\omega_p(v),\omega_q(v))^2$ estimated based on quadrature detection outputs of the two different reference angular frequencies $\Omega_A$ and $\Omega_B$ and a corrected received power $\eta^2\times a_q(\omega_p(v),\omega_q(v))^2$ should match each other at a correct estimate value $\omega=\omega_r$ of the received angular frequency (a correct estimate value $v=v_r$ of the velocity). The velocity/distance detection method of the present invention uses such a characteristic that when the received angular frequency $\omega_r$ is accurately estimated, the received power $a_p(\omega_p(v),\omega_q(v))^2$ and the corrected received power $\eta^2\times a_q(\omega p(v),\omega_q(v))^2$ need to match each other, regardless of the reference angular frequencies $\Omega_A$ and $\Omega_B$ used in quadrature detection.

FIG. 5 is an explanatory diagram of a frequency (velocity) estimation by the power of the composite frequency beat signal, and depicts a function of the received power when the velocity is assumed to be v. The horizontal axis denotes an estimated velocity v[m/s] and the vertical axis denotes received power [W], on which $a_p(\omega_p(v),\omega_q(v))^2$, $a_q(\omega_p(v),\omega_q(v))^2$, and $\eta^2\times a_q(\omega_p(v),\omega_q(v))^2$ when the velocity v of the transmitter 2 is changed and the influence of the Doppler shift is added are plotted. In FIG. 5, it is assumed that the transmitter 2 is moving toward the receiver 3 at a velocity of $v_r=-1$ m/s (the transmitter 2 is moving in a direction opposite to the receiver 3 at a velocity of $v_r=1$ m/s) and the receiver 3 is static. The reference angular frequencies $\Omega_A$ and $\Omega_B$ are, respectively, $2\pi\times39.75$ kHz, and $2\pi\times40.25$ kHz.

At the velocity of $v_r=-1$ m/s as a correct solution, it is understood that the estimate values of $a_p(\omega_p(v),\omega_q(v))^2$ and $\eta^2\times a_q(\omega_p(v),\omega_q(v))^2$ match each other. Based on this relationship, the velocity $v_r$ and a Doppler-shifted received angular frequency $\omega_r$ can be obtained.

Because the transmission waveform is formed of sinusoidal waves of 39.75 kHz and 40.25 kHz, the required transmission bandwidth is very narrow. A frequency shift amount due to the Doppler effect in a velocity range of about a walking velocity (about 1.5 m/s) is equal to or less than 200 Hz, and the frequency component of the sinusoidal wave is distributed in a narrow band even after frequency shift. Accordingly, the correction method using the received power ratio is useful, unless each frequency of the transmission waveform is not selected at an inflection point of the frequency response of the sensor. In the present embodiment, this correction method is applied, and the mismatch of the received powers is solved by a ratio at which respective amplitudes of the transmission waveform match each other. Furthermore, in a sensor in which the amplitude-frequency characteristic is nonlinear, detection of the velocity becomes possible by analyzing the characteristic and preparing a filter that cancels the characteristic so that the respective amplitudes match each other.

A difference $P(\omega_p(v),\omega_q(v))$ of the power estimate values by $\Omega_A$ and $\Omega_B$ is as represented by the following Equation (12).

$$P(\omega_p(v),\omega_q(v))=a_p(\omega_p(v),\omega_q(v))^2-\eta^2\times a_q(\omega_p(v),\omega_q(v))^2$$

$$(12)$$

By using the Equation (12) as an evaluation function, the velocity v or the received angular frequency $\omega$ at which $P(\omega_p(v),\omega_q(v))$ becomes the target precision (equal to or less than a threshold) (desirably, $P(\omega_p(v),\omega_q(v))=0$) is calculated (step S6).

Subsequently, a simultaneous estimation (in a short time) of the velocity $v_r$ of the transmitter 2 and the distance L between the transmitter 2 and the receiver 3 is performed (step S7). Specifically, the velocity v at which $P(\omega_p(v),\omega_q(v))$ becomes the target precision (equal to or less than the threshold) (desirably, $P(\omega_p(v),\omega_q(v))=0$) is estimated as the velocity $v_r$ of the transmitter 2.

The above Equations (6) and (7) include respective phases of the transmission waveform. When the velocity

$v_r$ is determined, these equations become equations in which phases $\varphi_p$, $\varphi_q$ are unknown numbers, respectively, and therefore these equations can be calculated by obtaining an argument of the complex sinusoidal wave. By this operation, a point of phase coincidence in the transmission waveform can be correctly obtained as the theoretically analyzed. Specifically, amplitudes of the complex outputs $a_p\exp(j\varphi_p)$ and $a_q\exp(j\varphi_q)$ in the above Equations (6) and (7) when the condition of $P(\omega_p(v),\omega_q(v))$ being the target precision (desirably, $P(\omega_p(v),\omega_q(v))=0$) is established are taken out (phase $\varphi_p$ and $\varphi_q$ are extracted), thereby enabling to obtain phase estimation amounts $\varphi_p$ and $\varphi_q$ represented in the following Equation (13).

$$\varphi_p = \mathrm{Arg}(a_p\exp(j\varphi_p))$$

$$\varphi_q = \mathrm{Arg}(a_q\exp(j\varphi_q)) \tag{13}$$

As the followings phases $\varphi_p$ and $\varphi_q$ are delivered due to the propagation delay. When the internal clocks of transmitter 2 and receiver 3 are synchronized each other, and when d seconds are required for propagation between the transmitter and the receiver, $\varphi_p = -\omega_p d$ and $\varphi_q = -\omega_q d$. From this relationship, the propagation delay time d of the ultrasonic wave between the transmitter 2 and the receiver 3 can be calculated by the following Equation (14) based on the phase estimation amounts obtained by the above Equation (13). However, when the transmitting and receiving elements have a phase-frequency characteristic, the received phase may further be affected, and in this case, a correction is required.

$$d = -(\varphi_p - \varphi_q) / (\omega_p - \omega_q) \tag{14}$$

Subsequently, the following Equation (15) is used to estimate the distance L between the transmitter 2 and the receiver 3 based on the propagation delay time d and the sound velocity c.

$$L = c \times d \tag{15}$$

In this manner, according to the velocity/distance detection method of the present invention, the distance and velocity of a moving object under an influence of the Doppler shift can be strictly and simultaneously measured by means of an efficient calculation method, by using a short beat signal waveform by plural frequency carriers. The two reference angular frequencies $\Omega_A$ and $\Omega_B$ are used here; however, three or more reference angular frequencies can be used. That is, the number of reference angular frequencies can be equal to or greater than the number of frequency signals of the transmitter pulse. Furthermore, the operation is performed so that the difference in the power estimate values $a_p(\omega_p(v),\omega_q(v))^2 - \eta^2 \times a_q(\omega_p(v),\omega_q(v))^2$ becomes the target precision. However, the operation can be performed so that the difference in the amplitude estimate values $a_p(\omega_p(v),\omega_q(v)) - \eta \times a_q(\omega_p(v),\omega_q(v))$ becomes the target precision. Further, the difference in the power estimate values $a_p(\omega_p(v),\omega_q(v))^2 - \eta^2 \times a_q(\omega_p(v),\omega_q(v))^2$ can be calculated with v as the main parameter, however, the above formula is also represented with the received angular frequency $\omega$ as the main parameter considering equation 2.

[Measuring precision]

To evaluate the performance of the velocity/distance detection method of the present invention, a velocity estimate simulation was performed.

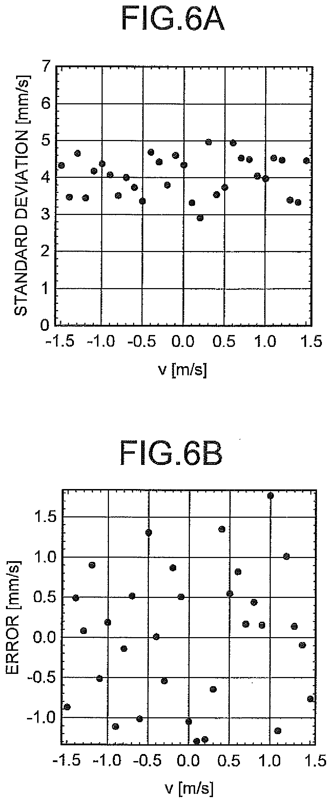

FIGS. 6A and 6B depict results of the velocity estimate simulation, and particularly FIG. 6A depicts a standard deviation of the velocity v, and FIG. 6B depicts an error of the velocity v. In the velocity estimate simulation, to reproduce the Doppler effect, a velocity set for each 0.1. m/s between -1.5 to 1.5 m/s was applied to the Doppler equation, to cause frequency shift. Transmission waveforms including the above Doppler shifts are generated, and noise was added so as to achieve SN ratio =30 dB. Furthermore, a measuring system having a flat frequency characteristic ($a_a = a_2$) and no signal attenuation due to a propagation distance was assumed. The transmission waveform was generated 30 times each with respect to each set velocity to perform a velocity estimation.

As shown in FIGS. 6A and 6B, it was confirmed that the velocity of a node moving at 1.5 m/s could be estimated with precision of several mm/s, and it was verified that the error from the set velocity was small and an excellent velocity estimation performance could be exerted even under a noise environment.

To evaluate the performance of the velocity/distance detection method according to the present invention, a performance evaluation test was carried out. In the performance evaluation test, to provide the Doppler effect to a sync pattern, electric slider SPvL8M150UA manufactured by Oriental Motor Co., Ltd was used to one-dimensionally reciprocate an ultrasonic transmitting element. Two receiving sensors were arranged in a receiver with an interval of base length L of 76.2 mm, to receive the sync pattern stereophonically. T40-16 manufactured by Nippon Ceramic Co., Ltd. was used as a transmitting element, and an ultrasonic sensor SPM0404UD5 using a MEMS microphone manufactured by Knowles Acoustics was used as a receiving sensor. A signal processing board had an AD converter, SRAM, FPGA, MPU and the like mounted thereon, and an analog received signal is A-D converted and then subjected to quadrature detection by a MPU (SH2/7145, 48 MHz) manufactured by Renesas Technology Corporation. A sync signal between the transmitter and the receiver is transmitted from the MPU to the transmitter after completion of quadrature detection. The electric slider installed with the transmitting element is installed at 1800 mm in front of the receiver and reciprocated in a range of a distance between the transmitter and the receiver of 1000 mm to 1800 mm. A working velocity can be set to between -1.5 m/s to 1.5 m/s for each 0.1 m/s. Definition of this velocity is such that positive is when the transmitter approaches the receiver, and negative is when the transmitter is away from the receiver.

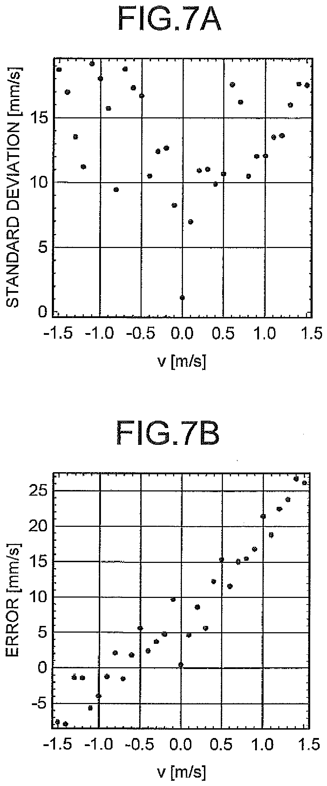

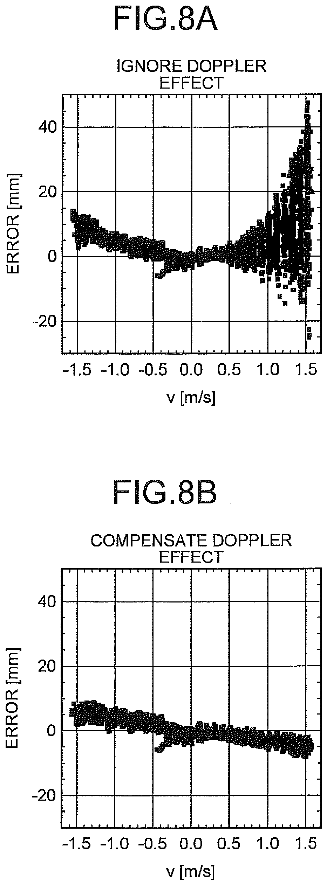

A hundred measurement results were obtained at each velocity, to obtain the standard deviation of the detection velocity and an error from the set velocity as in the simulation. FIGS. 7A and 7B depicts evaluation test results of a velocity estimation, and particularly FIG. 7A depicts a standard deviation of the velocity v, and FIG. 7B depicts an error of the velocity v. Also in the evaluation test results, similarly to the simulation, it was confirmed that the error was small. FIGS. 8A and 8B depicts distance estimation results of a moving body, and particularly FIG. 8A depicts a case where the Doppler effect is not taken into consideration (the Doppler effect is ignored), and FIG. 8B depicts a case of the present invention in which the Doppler effect is taken into consideration (the Doppler effect is compensated). 400 or more times of measurement was performed at each set velocity, the velocity and distance obtained by one measurement was designated as one set (of the velocity and distance), and all the measurement data were plotted. The detected distance is plotted on the vertical axis, and the velocity at that time is plotted on the horizontal axis.

As shown in FIG. 8A, when the Doppler effect is not taken into consideration, it is confirmed that distance estimation errors increase as the velocity increases. On the other hand, as shown in FIG. 8B, it can be confirmed that the distance estimation errors with an increase of the velocity is largely reduced, from the measurement result of the present invention in which the Doppler effect is taken into consideration by the estimated velocity.

According to the velocity/distance detection method of the present invention, the transmitter 2 determines the time reference point at which respective phases of the frequency signals are in a predetermined relationship based on the plural frequency signals, and transmits a composite frequency signal obtained by combining plural frequency signals after the respective phases of the frequency signals are adjusted based on the determined time reference point. The receiver 3 receives the composite frequency signal transmitted from the transmitter 2, performs quadrature detection of the composite frequency signal received with the Doppler effect and propagation delay by reference angular frequencies of at least the same number as that of the frequency signals, calculates complex outputs for the number of the reference angular frequencies based on a detection output thereof, calculates a velocity or a received angular frequency at which a difference in power estimate values or amplitude estimate values for the number of the reference angular frequencies based on the complex outputs for the number of the reference angular frequencies becomes a target precision, estimates the velocity at which the difference becomes the target precision as the velocity of the transmitter 2 or the receiver 3, extracts each phase of the plural frequency signals from the complex outputs for the number of the reference angular frequencies when the difference becomes the target precision, calculates the propagation delay time of the composite signal between the transmitter 2 and the receiver 3 based on each extracted phase, and estimates a distance between the transmitter 2 and the receiver 3 based on the calculated propagation delay time. Accordingly, the velocity and distance of a moving body can be measured highly precisely with a small computational cost and in a short time. In addition, the distance and velocity of a moving object under the influence of the Doppler shift can be strictly measured simultaneously according to an efficient algorithm, by using a short beat signal waveform of the composite frequency signal.

Because the transmitter 2 and the receiver 3 synchronize the internal clock thereof in advance by using a predetermined time synchronizing method, the propagation delay time can be calculated by a simple operation.

When calculating the velocity or the received angular frequency at which the difference in power estimate values or amplitude estimate values for the number of the reference angular frequencies becomes the target precision, the receiver 3 adds correction corresponding to a frequency characteristic of the receiving element and a velocity range of the transmitter. Accordingly, a difference in the power estimate values or amplitude estimate values can be calculated highly precisely.

The receiver 3 receives a signal output from the transmitter 2 in a form of any one of an ultrasonic wave, an electromagnetic wave, and modulated light. Therefore, the present invention can be applied to what can be expressed by general wave equation.

An embodiment of a system applying the velocity/distance detection method according to the present invention is explained below.

(Embodiment)

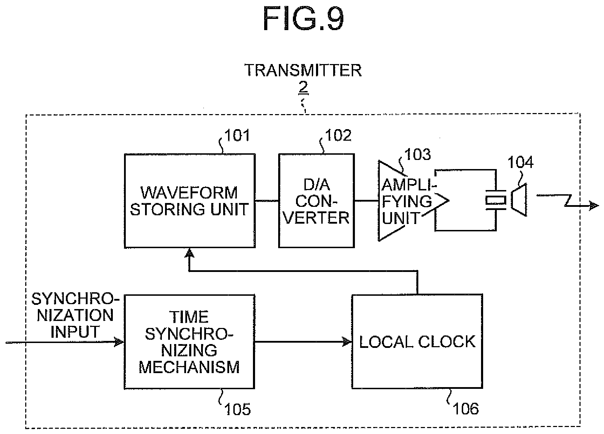

An implementation example of a measuring system applying the velocity/distance detection method according to the present invention is explained. FIG. 9 is a schematic configuration example of the transmitter 2 in FIG. 1. The transmitter 2 principally determines a time point at which phases of respective frequency signals are in a predetermined relationship based on plural frequency signals, defines the determined time point as a time reference point, adjusts each phase of the frequency signals based on the defined time reference point, combines the plural frequency signals after the phase adjustment, and transmits the combined plural frequency signals as a composite frequency beat signal in an ultrasonic wave.

As shown in FIG. 9, the transmitter 2 includes a waveform storing unit (waveform ROM) 101, a D/A converter 102, an amplifying unit 103, an ultrasonic transmitting element (ultrasonic speaker) 104, a time synchronizing mechanism 105, and a local clock 106, and these units are connected to each other via a transmission path.

The waveform storing unit 101 stores a digital signal of combined composite frequency beat waveforms $s(t)$ obtained by adjusting (equalizing) in advance the phases of the waveforms corresponding to the plural frequency signals. The composite frequency beat waveforms $s(t)$ can be waveforms, for example, as shown in FIG. 4, and the composite frequency beat signal can be expressed by the following Equation (3). For example, $\omega_1 = 2\pi \times 39.750$ kHz and $\omega_2 = 2\pi \times 40.250$ kHz.

$$s(t) = a_1 \sin(\omega_1 t + \varphi_1) + a_2 \sin(\omega_2 t + \varphi_2) \tag{3}$$

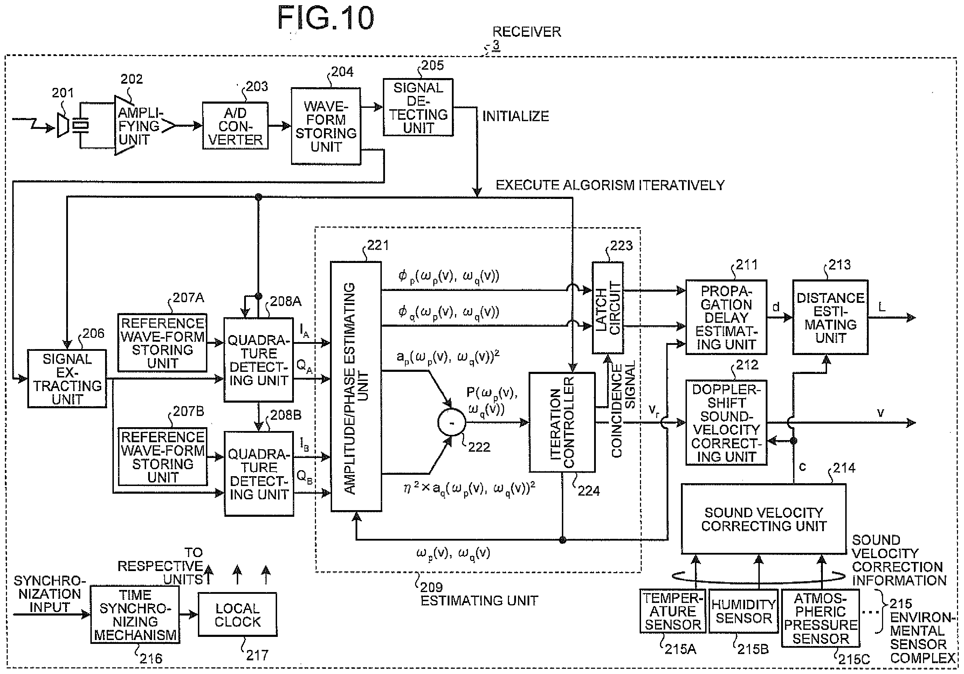

The time synchronizing mechanism 105 achieves time synchronization with a time synchronizing mechanism 216 of the receiver 3 (see FIG. 10), and synchronizes the local clock 106 with a local clock 217 of the receiver 3 (see FIG. 10). For example, a method described in Japanese Patent No. 4041899 of the present applicants can be used as a method of achieving time synchronization between the transmitter 2 and the receiver 3. According to the local clock 106 the transmitter starts to read the composite frequency beat waveforms $s(t)$ from the waveform storing unit 101 at a given time to commence a transmission. The D/A converter 102 converts a digital signal of the composite frequency beat waveforms $s(t)$ read from the waveform storing unit 101 into an analog signal and outputs the analog signal to the amplifying unit 103. The amplifying unit 103 amplifies the analog signal and outputs the analog signal to the ultrasonic transmitting element 104. The ultrasonic transmitting element 104 converts the analog signal into an ultrasonic wave and outputs the ultrasonic wave for transmission.

The ultrasonic transmitting element 104 is a commercially available piezoelectric ceramic oscillator. The element is an oscillator. Therefore, the element has satisfactory communication sensitivity and a satisfactory signal-to-noise ratio, but has a narrow communication band of about 39.0 to 41.0 kHz. The amplitude and phase propagation characteristics have strong frequency dependency within the communication band.

FIG. 10 is a schematic configuration example of the receiver 3 in FIG. 1. As shown in FIG. 10, the receiver 3 includes an ultrasonic receiving element (ultrasonic microphone) 201, an amplifying unit 202, an A/D converter 203, a waveform storing unit (waveform memory) 204, a signal detecting unit 205, a signal extracting unit 206, reference waveform storing units 207A and 207B, quadrature detecting units 208A and 208B, an estimating unit 209, a propagation delay estimating unit 211, a Doppler-shift sound-velocity correcting unit 212, a distance estimating unit 213, a sound velocity correcting unit 214, an environmental sensor 215, the time synchronizing mechanism 216, and the built-in clock 217, and these units are connected to each other via the transmission path.

The time synchronizing mechanism 216 achieves time synchronization with the time synchronizing mechanism 105 of the transmitter 2 (see FIG. 9), and synchronizes the local clock 217 with the local clock 106 of the transmitter 2 (see FIG. 9). The local clock 217 supplies the internal clock to the respective units.

The received waveforms in the receiver 3 undergoes the Doppler shift, and $\omega_1$ shifts to $\omega_p$ and $\omega_2$ shifts to $\omega_q$ due to the velocity v of the transmitter 2, and $\varphi_1$ shifts to $\varphi_p$ and $\varphi_2$ shifts to $\varphi_q$ due to propagation delay, to become a signal as represented in the following Equation (4).

$$u(t) = a_p \sin(\omega_p t + \varphi_p) + a_q \sin(\omega_q t + \varphi_q) \tag{4}$$

Because $a_p$, $a_q$, $\omega_p$, and $\omega_q$ are functions of v, these can be expressed as $a_p(v)$, $a_q(v)$, $\omega_p(v)$, and $\omega_q(v)$.

In the above equation, $a_p$ and $a_q$ represent reception amplitudes, and have generally different values according to the frequency characteristic of the receiving element, even if the amplitudes are equalized at the time of transmission. $\omega_p$ and $\omega_q$ represent Doppler-shifted transmission angular frequencies, and if these can be precisely measured, a precise velocity measurement value of the transmitter 2 can be obtained. $\varphi_p$ and $\varphi_q$ represent reception phases, and are added according to time setting of the receiver 3 and the phase-frequency characteristic of the receiving element.

The ultrasonic receiving element 201 receives an ultrasonic wave transmitted from the transmitter 2, converts the ultrasonic wave into an analog signal, and outputs the analog signal to the amplifying unit 202 as a received signal. The ultrasonic receiving element 201 is a commercially available piezoelectric ceramic oscillator. The amplifying unit 202 amplifies the received signal input from the ultrasonic receiving element 201 and outputs the received signal to the A/D converter 203.

The A/D converter 203 A/D-converts the received signal input from the amplifying unit 202 and outputs the signal to the waveform storing unit 204. The A/D converter 203 can operate, for example, on a sampling rate of $1\times10^6$ times/seconds and on a quantization bit length (linear quantization) of 14 bits. The sampling velocity needs to exceed twice the reception frequency of 40 kHz according to the sampling theorem. It is desired that a high sampling frequency is adopted for performing quadrature detection highly precisely. The waveform storing unit 204 stores the A/D-converted received signal. The waveform storing unit 204 can be constituted by, for example, a ring buffer having a capacity equal to or larger than a predetermined amount, and repeatedly overwrites new data on old data.

The signal detecting unit 205 monitors the waveform storing unit 204 at all times. When having detected signal arrival exceeding a noise level for continuous time period of more than T sec (T is time width of a window function), the signal detecting unit 205 outputs an initiation signal for initiating a frequency detecting process to the signal extracting unit 206, the quadrature detecting units 208A and 208B, and a iteration controller 224, so that a velocity/distance detection process is performed.

Upon input of the initiation signal, the signal extracting unit 206 reads an effective received signal for precisely T seconds from the waveform storing unit 204 and outputs the received signal to the quadrature detecting units 208A and 208B at subsequent stages.

The quadrature detecting unit 208A multiplies the received waveform for T seconds by a cos waveform and a - sin waveform of a reference angular frequency $\Omega_A$ (for example, $2\pi\times40.250\times10^3$ Hz) slightly away from $\omega_t$ and integrates the received waveform to obtain detection outputs ($I_A$, $Q_A$), and outputs the detection outputs to an amplitude/phase estimating unit 221.

Specifically, when the received waveform is assumed to be u(t), $I_A$ and $Q_A$ become as expressed in the following Equation (16).

$$I_A=(1/T)\int[-T/2,T/2]u(t)\cos\Omega_A t dt$$

$$Q_A=-(1/T)\int[-T/2,T/2]u(t)\sin\Omega_A t dt \qquad (16)$$

In the above Equation (16), a time origin of t=0 is taken at the center of the received waveform for T seconds. $\cos\Omega_A t$ and $-\sin\Omega_A t$ are stored in the waveform storing unit 207A in advance, and the quadrature detecting unit 208A reads $\cos\Omega_A t$ and $-\sin\Omega_A t$ from the waveform storing unit 207A to calculate the detection outputs ($I_A$, $Q_A$).

The detection outputs ($I_A$, $Q_A$) can be obtained by performing a product-sum calculation with respect to the sampled received waveform for a discrete time. However, mathematically, it is a numerical integration in which an integral of a continuous time function is approximated from a sampled value of a signal for the discrete time. Therefore, to increase calculation precision, a high-order integration approximation, for example, trapezoidal rule or Simpson's rule can be used if needed. Also in this case, when the coefficients are previously multiplied to numerical tables of $\cos\Omega_A t$ and $-\sin\Omega_A t$, the integration can be performed in a simple product-sum calculation. In the present embodiment, Simpson's rule is used.

The quadrature detecting unit 208B performs the same processing as in the quadrature detecting unit 208A for another reference angular frequency $Q_B$ (for example, $2\pi\times39.750\times10^3$ Hz) to obtain detection outputs ($I_B$, $Q_B$), and outputs the detection outputs to the amplitude/phase estimating unit 221 of the estimating unit 209. $\cos\Omega_B t$ and $-\sin\Omega_B t$ are stored in the reference waveform storing unit 207B in advance. The quadrature detecting unit 208B reads $\cos\Omega_B t$ and $-\sin\Omega_B t$ from the reference waveform storing unit 207B to calculate the detection outputs ($I_B$, $Q_B$), and outputs the detection outputs ($I_B$, $Q_B$) to the amplitude/phase estimating unit 221 of the estimating unit 209.

The detection outputs ($I_A$, $Q_A$) and ($I_B$, $Q_B$) can be expressed by the following Equation (5).

$$I_A=r_A(\omega_p)a_p\sin\varphi_p+r_A(\omega_q)a_q\sin\varphi_q$$

$$Q_A=i_A(\omega_p)a_p\cos\varphi_p+i_A(\omega_q)a_q\cos\varphi_q$$

$$I_B=r_B(\omega_p)a_p\sin\varphi_p+r_B(\omega_q)a_q\sin\varphi_q$$

$$Q_B=i_B(\omega_p)a_p\cos\varphi_p+i_B(\omega_q)a_q\cos\varphi_q \qquad (5)$$

The estimating unit 209 calculates complex outputs $a_p\exp(j\varphi_p)$ and $a_q\exp(j\varphi_q)$ for the number of reference angular frequencies based on the detection outputs $(I_A, Q_A)$ and $(I_B, Q_B)$, and performs an operation to obtain the velocity v so that a difference in the power estimate values $|a_p(\omega_p(v),\omega_q(v))^2-\eta^2\times a_q(\omega_p(v),\omega_q(v))^2|$ becomes a target precision (equal to or lower than a threshold). The estimating unit 209 outputs the velocity v in this case to the Doppler-shift sound-velocity correcting unit 212 as a velocity estimate value $v_r$, and outputs phase estimate values $\varphi_p$ and $\varphi_q$ in this case to the propagation delay estimating unit 211.

The estimating unit 209 includes the amplitude/phase estimating unit 221, a subtractor 222, a latch circuit 223, and the iteration controller 224.

The amplitude/phase estimating unit 221 calculates complex outputs $a_p\exp(j\varphi_p)$ and $a_q\exp(j\varphi_q)$ represented in the following Equations (6) and (7) based on detection outputs $(I_A, Q_A)$ and $(I_B, Q_B)$. The amplitude/phase estimating unit 221 calculates received power $a_p(\omega_p(v),\omega_q(v))^2$, and $\eta(v)^2\times a_q(\omega_p(v),\omega_q(v))^2$ based on the complex outputs $a_p\exp(j\varphi_p)$ and $a_q\exp(j\varphi_q)$ to output the received power to the subtractor 222. Furthermore, the amplitude/phase estimating unit 221 uses the following Equation (13) to extract arguments of $a_p\exp(j\varphi_p)$ and $a_q\exp(j\varphi_q)$ and outputs $\varphi_p(\omega_p(v),\omega_q(v))\varphi_q(\omega_p(v),\omega_q(v))$ to the latch circuit 223.

$$a_p\exp(j\varphi_p)=(i_B(\omega_q)Q_A-i_A(\omega_q)Q_B)/(i_A(\omega_p)i_B(\omega_q)-$$

$$i_A(\omega_q)i_B(\omega_p))+j(r_B(\omega_q)I_A-r_A(\omega_q)I_B)/(r_A(\omega_p)r_B(\omega_q)-r_A(\omega_q)r_B(\omega_p)$$

$$(6)$$

$$a_q\exp(j\varphi_q)=(-i_B(\omega_p)Q_A+i_A(\omega_p)Q_B)/(i_A(\omega_p)i_B(\omega_q)-$$

$$i_A(\omega_q)i_B(\omega_p))+j(-r_B(\omega_p)I_A+r_A(\omega_p)I_B)/(r_A(\omega_p)r_B(\omega_q)-r_A(\omega_q)r_B(\omega_p)$$

$$(7)$$

$$\varphi_p=Arg(a_p\exp(j\varphi_p))$$

$$\varphi_q=Arg(a_q\exp(j\varphi_q))\qquad\qquad(13)$$

The subtractor 222 calculates $P(\omega_p(v),\omega_q(v))=a_p(\omega_p(v),\omega_q(v))^2-\eta^2\times a_q(\omega_p(v),\omega_q(v))^2$ and outputs $P(\omega_p(v),\omega_q(v))$ to the iteration controller 224.

The iteration controller 224 determines whether $P(\omega_p(v),\omega_q(v))$ is the target precision (equal to or lower than a threshold), and outputs the velocity v at which $P(\omega_p(v),\omega_q(v))$ becomes the target precision to the Doppler-shift sound-velocity correcting unit 212 as the velocity estimate value $v_r$ of the transmitter 2. When $P(\omega_p(_v),\omega_q(_v))$ becomes the target precision, the iteration controller 224 outputs a coincidence signal to the latch circuit 223. When $P(\omega_p(v),\omega_q(v))$ is not the target precision, the iteration controller 224 outputs changed $\omega_p(v),\omega_q(v)$ to the amplitude/phase estimating unit 221 and the propagation delay estimating unit 211, and performs repetitive processing until $P(\omega_p(v),\omega_q(v))$ becomes the target precision.

The amplitude/phase estimating unit 221 uses $\omega_p(v)$, $\omega_q(v)$ fed back from the iteration controller 224 to perform an operation to obtain $a_p(\omega_p(v),\omega_q(v))$, $\eta(v)^2\times a_q(\omega_p(v),\omega_q(v))^2$, $\varphi_p(\omega_p(v),\omega_q(v)$, $\varphi_q(\omega_p(v),\omega_q(v))$ again, and outputs operation results to the subtractor 222 and the latch circuit 223.

The latch circuit 223 latches phases $\varphi_p(\omega_p(v),\omega_q(v))$ and $\varphi_q(\omega_p(v),\omega_q(v))$ input from the amplitude/phase estimating unit 221 when the coincidence signal of the iteration controller 224 is input, and outputs the latched phases as phase estimate values to the propagation delay estimating unit 211. That is, the latch circuit 223 outputs phases $\varphi_p(\omega_p(v),\omega_q(v))$ and $\varphi_q(\omega_p(v),\omega_q(v))$ when $P(\omega_p(v),\omega_q(v))$ becomes the target precision to the propagation delay estimating unit 211 as the phase estimate values.

Pieces of environmental information (temperature information, humidity information, and atmospheric pressure information) detected by the environmental sensor complex 215 such as a temperature sensor 215A, a humidity sensor 215B, and an atmospheric pressure sensor 215C are input to the sound velocity correcting unit 214. The sound velocity correcting unit 214 calculates the sound velocity c based on the environmental information and outputs the sound velocity c to the distance estimating unit 213 and the Doppler-shift sound-velocity correcting unit 212.

The Doppler-shift sound-velocity correcting unit 212 uses the above Equation (2) to correct the velocity $v_r$ estimated by the estimating unit 209 by the sound velocity c input from the sound-velocity correcting unit 214, and outputs the corrected velocity v.

The propagation delay estimating unit 211 calculates the propagation delay time d based on the phase estimation

values $\varphi_p(\omega_p(v),\omega_q(v))$ and $\varphi_q(\omega_p(v),\omega_q(v))$ input from the latch circuit 223, and outputs the propagation delay time d to the distance estimating unit 213. Because the built-in clock 217 in the receiver 3 is synchronized with the local clock 106 in the transmitter 2, the propagation delay estimating unit 211 can calculate the propagation delay time d by using the following Equation (14). $\omega_p$ and $\omega_q$ used in Equation (14) are $\omega_p$ and $\omega_q$ when $P(\omega_p(v),\omega_q(v))$ becomes target precision.

$$d = -(\varphi_p - \varphi_q) / (\omega_p - \omega_q) \qquad (14)$$

The distance estimating unit 213 uses the following Equation (15) to calculate and output the distance L between the transmitter and the receiver based on the propagation delay time d input from the propagation delay estimating unit 211 and the sound velocity c input from the sound velocity correcting unit 214.

$$L = c \times d \qquad (15)$$

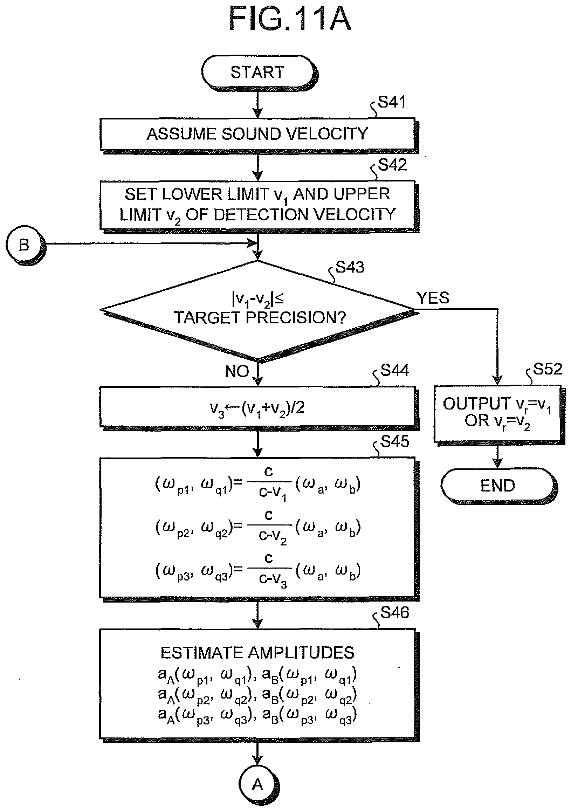

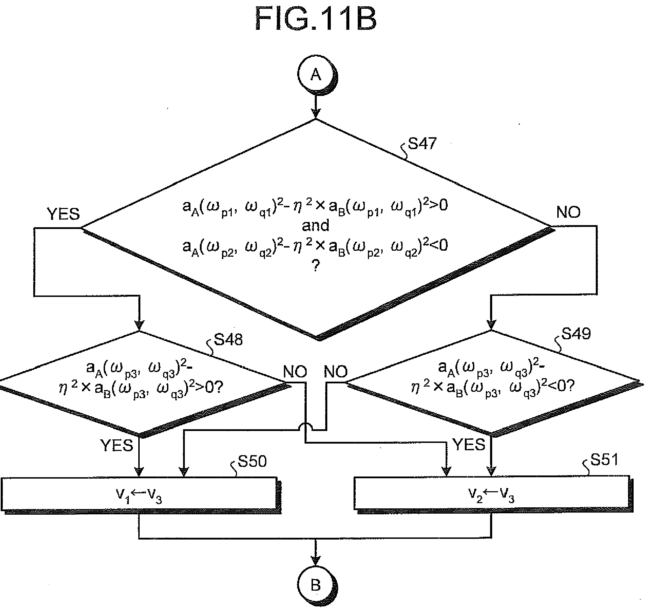

In this manner, the distance and velocity can be simultaneously detected with a small computational cost. FIGS. 11A and 11B are flowcharts for explaining an example of a process of calculating the velocity $v_r$ of the transmitter 2 by the estimating unit 209. Flowcharts shown in FIGS. 11A and 11B are for obtaining $P(\omega_p(v),\omega_q(v))=0$, that is, $a_p(\omega_p(v),\omega_q(v))^2 = \eta^2 \times a_q(\omega_p(v),\omega_q(v))^2$ with required precision by using the method of bisection to calculate the velocity $v_r$.

In FIGS. 11A and 11B, the estimating unit 209 assumes the sound velocity c first (step S41). For example, the sound velocity c can be set as c=340 m/s. The estimating unit 209 sets a lower limit $v_1$ and an upper limit $v_2$ of the detection velocity (step S42). For example, these can be set as $v_1$=-1.0 m/s and $v_2$=1.0 m/s.

The estimating unit 209 then determines whether $|v_1-v_2| \leq$ threshold (target precision) (step S43). When $|v_1-v_2| \leq$ threshold (target precision) is true (YES at step S43), the estimating unit 209 sets the limit as $v_r=v_1$ or $v_r=v_2$ (step S52).

On the other hand, when $|v_1-v_2| \leq$ threshold (target precision) is not true (NO at step S43), the estimating unit 209 sets $(v_1+v_2) / 2$ as $v_3$ (step S44). The estimating unit 209 calculates $(\omega_{p1},\omega_{q1}) = \{C/ (C-v_1)\}(\omega_a,\omega_b)$, $(\omega_{p2},\omega_{q2})=\{c/(c-v_2)\}(\omega_a,\omega_b)$, and $(\omega_{p3},\omega_{q3})=\{c/(c-v_3)\}(\omega_a,\omega_b)$ (step S45). The estimating unit 209 estimates amplitudes $\{a_A(\omega_{p1},\omega_{q1}),a_B(\omega_{p1},\omega_{q1})\}$, $\{a_A(\omega_{p2},\omega_{q2}),a_B(\omega_{p2},\omega_{q2})\}$, and $\{a_A(\omega_{p3},\omega_{q3}),a_B(\omega_{p3},\omega_{q3})\}$ based on the above Equations (8) and (9) (step S46).

Thereafter, the estimating unit 209 determines whether $a_A(\omega_{p1},\omega_{q1})^2 - \eta^2 \times a_B(\omega_{p1},\omega_{q1})^2 > 0$ and $a_A(\omega_{p2},\omega_{q2})^2 - \eta^2 \times a_B(\omega_{p2},\omega_{q2})^2 < 0$ (step S47). In this equation, $\eta$ is a sensitivity correction value based on the frequency characteristic of the receiving element. When $a_A(\omega_{p1},\omega_{q1})^2 - \eta^2 \times a_B(\omega_{p1},\omega_{q1})^2 > 0$ and $a_A(\omega_{p2},\omega_{q2})^2 - \eta^2 \times a_B(\omega_{p2},\omega_{q2})^2 < 0$ are true (YES at step S47), the estimating unit 209 determines whether $a_A(\omega_{p3},\omega_{q3})^2 - \eta^2 \times a_B(\omega_{p3},\omega_{q3})^2 > 0$ (step S48).

When $a_A(\omega_{p3},\omega_{q3})^2 - \eta^2 \times a_B(\omega_{p3},\omega_{q3})^2 > 0$ is true (YES at step S48), the estimating unit 209 sets $v_3$ as $v_1$ (Step S50). When $a_A(\omega_{p3},\omega_{q3})^2 - \eta^2 \times a_B(\omega_{p3},\omega_{q3})^2 > 0$ is not true (NO at step S48), the estimating unit 209 sets $v_3$ as $v_2$ (step S51), and control returns to step S43.

On the other hand, at step S47, when $a_A(\omega_{p1},\omega_{q1})^2 - \eta^2 \times a_B(\omega^{p1},\omega^{q1})^2 > 0$ and $a_A(\omega_{p2},\omega_{q2})^2 - \eta^2 \times a_B(\omega_{p2},\omega_{q2})^2 < 0$ are not true (NO at step S47), the estimating unit 209 determines whether $a_A(\omega_{p3},\omega_{q3})^2 - \eta^2 \times a_B(\omega_{p3},\omega_{q3})^2 > 0$ (step S49). When $a_A(\omega_{p3},\omega_{q3})^2 - \eta^2 \times a_B(\omega_{p3},\omega_{q3})^2 > 0$ is true (YES at step S49), the estimating unit 209 sets $v_3$ as $v_2$ (step S51). When $a_A(\omega_{p3},\omega_{q3})^2 - \eta^2 \times a_B(\omega_{p3},\omega_{q3})^2 > 0$ is not true (NO at step S49), the estimating unit 209 sets $v_3$ as $v_1$ (step S50), and control returns to step S43.

At step S43, the estimating unit 209 determines again whether $|v_1-v_2| \leq$ threshold (target precision), and repeatedly performs the same process until $|v_1-v_2| \leq$ threshold (target precision) is achieved (steps S43 to S51).

According to the embodiment described above, the velocity can be measured by using only the composite frequency signal to be used for positioning measurement, and simultaneous measurement of the position and the velocity can be performed highly precisely in a short time without particularly adding supplemental elements. A case where two frequency signals are used is explained here. However, three or more frequency signals can be used. In the case of using three or more frequency signals, the quadrature detection is performed by using the reference angular frequencies for the number of frequency signals.

The method of simultaneously measuring the position and the velocity by using the composite frequency signal generally has a degraded precision than a method of measuring the velocity by a single frequency signal because an amplitude ratio of the signal is added to an error factor. However, it has been confirmed that velocity detection precision comparable to a case of using the single frequency signal can be obtained by using a broadband element having an excellent frequency characteristic for the receiving element.

(Application example of the present invention)

In the above explanations, it is assumed that only the transmitter 2 moves and the air as a medium of sound and the receiver 3 are stationary. However, a relational expression can be derived for the Doppler shift when the air and the receiver 3 are moving. When it is assumed that the velocity of the transmitter 2 is $v_t$, the velocity of the receiver 3 is $v_e$, the velocity of the medium is $v_m$, the transmission angular frequency $\omega_t$ becomes the reception angular frequency $\omega_r = ((c - v_e + v_m)/(c - v_t + v_m))\omega_t$, and is received by the receiver 3. Accordingly, when the receiver 3 is moving, or the medium is moving, the reception angular frequency $\omega_r$ can be determined, and an amount thereof can be known. For example, when the transmitter 2 and the receiver 3 are fixed, this case can be used as a measuring method of the velocity of the medium, that is, the wind velocity.

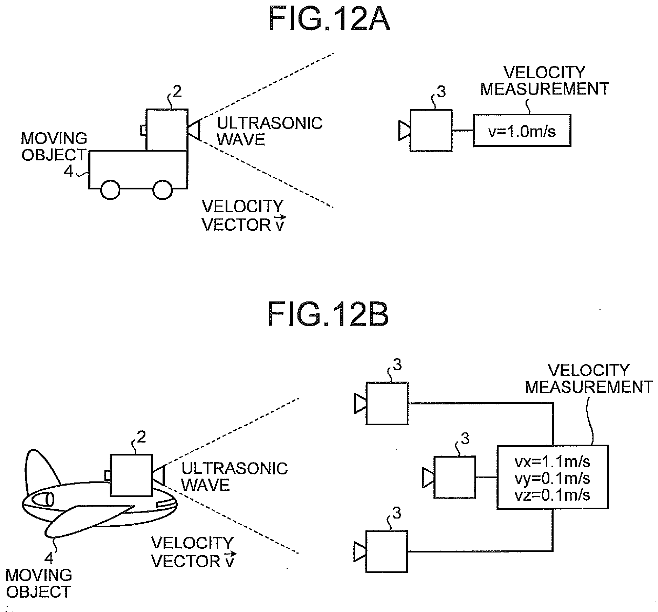

In the above explanations, as shown in FIG. 12A, a case where the transmitter 2 is mounted on a moving body 4, and one receiver 3 measures a velocity one-dimensionally is explained. However, two-dimensional or three-dimensional velocity measurement is also possible.

The ultrasonic transmitter 2 and receiver 3 respectively have a certain effective aperture, and plural transmitters 2 and receivers 3 can be installed within the effective aperture. For example, as shown in FIG. 12B, when three receivers 3 are installed in the effective aperture of one transmitter 2 mounted on the moving body 4 moving three-dimensionally, velocity components in respective directions X, Y, and Z of the velocity vector $v\rightarrow$ of the transmitter 2 can be known, and when the positional relationship between the transmitter and the receiver is known separately, the velocity vector $v\rightarrow$ can be obtained as T=1 ms or the like based on the relationship. Accordingly, an instantaneous moving direction of a moving object in the space can be precisely measured.

Furthermore, a case where an ultrasonic wave emitted from the transmitter 2 is received by the receiver 3 to measure the velocity and distance of the transmitter 2 is explained above. However, the receiver 3 can emit an ultrasonic wave and receive a reflected wave from a moving body to measure the velocity and distance of the moving body 4.

The velocity/distance detection system, the velocity/distance detection apparatus, and the velocity/distance detection method according to the present invention can be favorably used for, for example, an ultrasonic anemometer and a velocity meter. Furthermore, the velocity/distance detection system, the velocity/distance detection apparatus, and the velocity/distance detection method can be favorably used for motion tracking in virtual reality, guidance of a machine tool, and guidance of a robot. In this case, along with positioning measurement, if there is velocity information at each point obtained independently thereof, control with higher precision can be executed by solving an equation including positions.

Industrial Applicability

The velocity/distance detection system, the velocity/distance detection apparatus, and the velocity/distance detection method according to the present invention can be widely used, such as for an ultrasonic anemometer, a velocity meter, motion tracking in virtual reality, guidance of a machine tool, and guidance of a robot.

Reference Signs List

1 MEASURING SYSTEM
2 TRANSMITTER
3 RECEIVER
4 MOVING OBJECT
101 WAVEFORM STORING UNIT (WAVEFORM ROM)
102 D/A CONVERTER
103 AMPLIFYING UNIT
104 ULTRASONIC TRANSMITTING ELEMENT (ULTRASONIC SPEAKER)
105 TIME SYNCHRONIZING MECHANISM
106 LOCAL CLOCK
201 ULTRASONIC RECEIVING ELEMENT (ULTRASONIC MICROPHONE)
202 AMPLIFYING UNIT
203 A/D CONVERTER
204 WAVEFORM STORING UNIT (WAVEFORM MEMORY)
205 SIGNAL DETECTING UNIT
206 SIGNAL EXTRACTING UNIT
207A, 207B REFERENCE WAVEFORM STORING UNIT

208A, 208B QUADRATURE DETECTING UNIT
209 ESTIMATING UNIT
211 PROPAGATION DELAY ESTIMATING UNIT
212 Doppler-SHIFT SOUND-VELOCITY CORRECTING UNIT
213 DISTANCE ESTIMATING UNIT
214 SOUND VELOCITY CORRECTING UNIT
215 ENVIRONMENTAL SENSOR COMPLEX
216 TIME SYNCHRONIZING MECHANISM
217 LOCAL CLOCK
221 AMPLITUDE/PHASE ESTIMATING UNIT
222 SUBTRACTOR
223 LATCH CIRCUIT
224 ITERATION CONTROLLER

**Claims**

1. A velocity/distance detection system (1) that comprises a transmitter (2) and a receiver (3) and is configured to detect a distance between the transmitter and the receiver, wherein

   the transmitter is configured to determine a time reference point at which respective phases of plural frequency signals are in a predetermined relationship based on the plural frequency signals, and to transmit a composite frequency signal obtained by combining the plural frequency signals after the respective phases of the plural frequency signals are adjusted based on the determined time reference point, and
   the receiver comprises:

   a receiving unit (201, 202, 203, 204, 205) configured to receive the composite frequency signal transmitted from the transmitter,
   a complex-output calculating unit (206, 207A, 207B, 208A, 208B) configured to perform quadrature detection of the composite frequency signal received by the receiving unit with a Doppler effect and propagation delay by reference angular frequencies of at least the same number as that of the plural frequency signals, and to calculate complex outputs for a number of the reference angular frequencies based on a detection output thereof, whereby each complex output represents an amplitude estimate value and a phase estimate value, an operating unit (209) configured to calculate a velocity or a reception angular frequency at which the difference in power estimate values or amplitude estimate values for the number of the reference angular frequencies based on the complex outputs for the number of the reference angular frequencies becomes equal to or less than a threshold,
   a velocity estimating unit (212) configured to estimate the velocity when the difference becomes equal to or less than the threshold as a velocity of the transmitter or the receiver, and
   a distance estimating unit (211, 213) configured to extract each phase estimate value of the plural frequency signals from the complex outputs for the number of the reference angular frequencies when the difference becomes equal to or less than the threshold, to calculate a propagation delay time of the composite frequency signal between the transmitter and the receiver based on each extracted phase estimate value, and to estimate the distance between the transmitter and the receiver based on the calculated propagation delay time.

2. The velocity/distance detection system according to claim 1, wherein the transmitter and the receiver synchronize internal clocks thereof in advance by using a predetermined time synchronizing method.

3. The velocity/distance detection system according to claim 1, wherein when calculating the velocity or the received angular frequency at which the difference in power estimate values or amplitude estimate values for the number of the reference angular frequencies becomes target precision, the operating unit adds correction corresponding to a frequency characteristic of a receiving element and a velocity range of the transmitter.

4. The velocity/distance detection system according to claim 1, wherein the receiving unit is configured to receive a signal output from the transmitter in the form of any one of an ultrasonic wave, an electromagnetic wave, and modulated light.

5. A velocity/distance detection apparatus (3) configured to receive a signal output from a transmitter (2) to detect the distance between the transmitter and the apparatus itself, the transmitter being configured to determine a time reference point at which respective phases of plural frequency signals are in a predetermined relationship based on the plural frequency signals, and to transmit a composite frequency signal obtained by combining the plural frequency signals after the respective phases of the plural frequency signals are adjusted based on the determined time reference point; the velocity/distance detection apparatus comprising:

a receiving unit (201, 202, 203, 204, 205) configured to receive the composite frequency signal transmitted from the transmitter,

a complex-output calculating unit (206, 207A, 207B, 208A, 208B) configured to perform quadrature detection of the composite frequency signal received by the receiving unit with a Doppler effect and propagation delay by reference angular frequencies of at least same number as that of the plural frequency signals, and to calculate complex outputs for a number of the reference angular frequencies based on a detection output thereof, whereby each complex output represents an amplitude estimate value and a phase estimate value,

an operating unit (209) configured to calculate a velocity or a reception angular frequency at which the difference in power estimate values or amplitude estimate values for the number of the reference angular frequencies based on the complex outputs for the number of the reference angular frequencies becomes equal to or less than a threshold,

a velocity estimating unit (212) configured to estimate the velocity when the difference becomes equal to or less than the threshold as a velocity of the transmitter or the receiver, and

a distance estimating unit (211, 213) configured to extract each phase estimate value of the plural frequency signals from the complex outputs for the number of the reference angular frequencies when the difference becomes equal to or less than the threshold, to calculate a propagation delay time of the composite frequency signal between the transmitter and the receiver based on each extracted phase estimate value, and to estimate the distance between the transmitter and the receiver based on the calculated propagation delay time.

6. The velocity/distance detection apparatus according to claim 5, further comprising a time synchronizing unit that synchronizes an internal clock with that of the transmitter by using a predetermined time synchronizing method.

7. The velocity/distance detection apparatus according to claim 5, wherein when calculating the velocity or the received angular frequency at which the difference in power estimate values or amplitude estimate values for the number of the reference angular frequencies becomes target precision, the operating unit adds correction corresponding to a frequency characteristic of a receiving element and a velocity range of the transmitter.

8. The velocity/distance detection apparatus according to claim 5, wherein the receiving unit is configured to receive a signal output from the transmitter in the form of any one of an ultrasonic wave, an electromagnetic wave, and modulated light.

9. A velocity/distance detection method performed by a velocity/distance detection apparatus (3) that receives a signal output from a transmitter (2) to detect the distance between the transmitter and the apparatus itself, wherein the transmitter determines a time reference point at which respective phases of plural frequency signals are in a predetermined relationship based on the plural frequency signals, and transmits a composite frequency signal obtained by combining the plural frequency signals after the respective phases of the frequency signals are adjusted based on the determined time reference point, the method comprising:

receiving the composite frequency signal transmitted from the transmitter;

performing quadrature detection of the composite frequency signal as received with a Doppler effect and propagation delay by reference angular frequencies of at least the same number as that of the plural frequency signals, and calculating complex outputs for a number of the reference angular frequencies based on the detection, whereby each complex output represents an amplitude estimate value and a phase estimate value,

calculating a velocity or a reception angular frequency at which the difference in power estimate values or amplitude estimate values for the number of the reference angular frequencies based on the complex outputs for the number of the reference angular frequencies becomes equal to or less than a threshold,

estimating the velocity when the difference becomes equal to or less than the threshold as a velocity of the transmitter or the receiver, and

extracting each phase estimate value of the plural frequency signals from the complex outputs for the number of the reference angular frequencies when the difference becomes equal to or less than the threshold, calculating a propagation delay time of the composite frequency signal between the transmitter and the receiver based on each extracted phase estimate value, and estimating the distance between the transmitter and the receiver based on the calculated propagation delay time.

**Patentansprüche**

1. Geschwindigkeits-/Abstandserkennungssystem (1), das einen Sender (2) und einen Empfänger (3) umfasst und dafür konfiguriert ist, einen Abstand zwischen dem Sender und dem Empfänger zu erkennen, wobei

der Sender dafür konfiguriert ist, basierend auf mehreren Frequenzsignalen einen Referenzzeitpunkt zu bestimmen, zu dem sich entsprechende Phasen der mehreren Frequenzsignale in einem festgelegten Verhältnis befinden, und ein zusammengesetztes Frequenzsignal zu senden, das durch Kombinieren der mehreren Frequenzsignale erzielt wird, nachdem die entsprechenden Phasen der mehreren Frequenzsignale basierend auf dem bestimmten Referenzzeitpunkt justiert wurden, und

der Empfänger Folgendes umfasst:

eine Empfangseinheit (201, 202, 203, 204, 205), die dafür konfiguriert ist, das vom Sender gesendete zusammengesetzte Frequenzsignal zu empfangen,

eine Komplexausgabe-Berechnungseinheit (206, 207A, 207B, 208A, 208B), die dafür konfiguriert ist, mit einem Dopplereffekt und einer Laufzeitverzögerung durch Referenzwinkelfrequenzen von mindestens der gleichen Anzahl wie die der mehreren Frequenzsignale eine Quadraturerkennung des von der Empfangseinheit empfangenen zusammengesetzten Frequenzsignals auszuführen und basierend auf deren Erkennungsausgabe Komplexausgaben für eine Anzahl von Referenzwinkelfrequenzen zu berechnen,

wodurch jede Komplexausgabe einen Amplitudenschätzwert und einen Phasenschätzwert darstellt,

eine Betriebseinheit (209), die dafür konfiguriert ist, eine Geschwindigkeit oder eine Empfangswinkelfrequenz zu berechnen, bei der die Differenz der Leistungsschätzwerte oder Amplitudenschätzwerte für die Anzahl von Referenzwinkelfrequenzen basierend auf den Komplexausgaben für die Anzahl der Referenzwinkelfrequenzen gleich oder kleiner als ein Grenzwert wird,

eine Geschwindigkeitsschätzeinheit (212), die dafür konfiguriert ist, die Geschwindigkeit, bei der die Differenz gleich oder kleiner als der Grenzwert wird, als eine Geschwindigkeit des Senders oder des Empfängers zu schätzen, und

eine Abstandsschätzeinheit (211, 213), die dafür konfiguriert ist, jeden Phasenschätzwert der mehreren Frequenzsignale aus den Komplexausgaben für die Anzahl der Referenzwinkelfrequenzen zu extrahieren, wenn die Differenz gleich oder kleiner als der Grenzwert wird, um basierend auf jedem extrahierten Phasenschätzwert eine Laufzeitverzögerung des zusammengesetzten Frequenzsignals zwischen dem Sender und dem Empfänger zu berechnen, und basierend auf der berechneten Laufzeitverzögerung den Abstand zwischen dem Sender und dem Empfänger zu schätzen.

2. Geschwindigkeits-/Abstandserkennungssystem nach Anspruch 1, wobei der Sender und der Empfänger mit Hilfe eines festgelegten Zeitsynchronisationsverfahrens im Voraus ihre inneren Uhren synchronisieren.

3. Geschwindigkeits-/Abstandserkennungssystem nach Anspruch 1, wobei die Betriebseinheit beim Berechnen der Geschwindigkeit oder der empfangenen Winkelfrequenz, bei der die Differenz in Leistungsschätzwerten oder Amplitudenschätzwerten für die Anzahl der Referenzwinkelfrequenzen zur Zielpräzision wird, eine Korrektur addiert, die einer Frequenzcharakteristik eines Empfangselements und einem Geschwindigkeitsbereich des Senders entspricht.

4. Geschwindigkeits-/Abstandserkennungssystem nach Anspruch 1, wobei die Empfangseinheit dafür konfiguriert ist, eine Signalausgabe vom Sender in Form eines von einer Ultraschallwelle, einer elektromagnetischen Welle oder modulierten Lichts zu empfangen.

5. Geschwindigkeits-/Abstandserkennungsvorrichtung (3), dafür konfiguriert, eine Signalausgabe von einem Sender (2) zu empfangen, um den Abstand zwischen dem Sender und der Vorrichtung selbst zu erkennen, wobei der Sender dafür konfiguriert ist, basierend auf mehreren Frequenzsignalen einen Referenzzeitpunkt zu bestimmen, zu dem sich entsprechende Phasen der mehreren Frequenzsignale in einem festgelegten Verhältnis befinden, und ein zusammengesetztes Frequenzsignal zu senden, das durch Kombinieren der mehreren Frequenzsignale erzielt wird, nachdem die entsprechenden Phasen der mehreren Frequenzsignale basierend auf dem bestimmten Referenzzeitpunkt justiert wurden, wobei die Geschwindigkeits-/Abstandserkennungsvorrichtung Folgendes umfasst:

eine Empfangseinheit (201, 202, 203, 204, 205), die dafür konfiguriert ist, das vom Sender gesendete zusammengesetzte Frequenzsignal zu empfangen,

eine Komplexausgabe-Berechnungseinheit (206, 207A, 207B, 208A, 208B), die dafür konfiguriert ist, mit einem Dopplereffekt und einer Laufzeitverzögerung durch Referenzwinkelfrequenzen von mindestens der gleichen Anzahl wie die der mehreren Frequenzsignale eine Quadraturerkennung des von der Empfangseinheit empfangenen zusammengesetzten Frequenzsignals auszuführen und basierend auf deren Erkennungsausgabe Komplexausgaben für eine Anzahl von Referenzwinkelfrequenzen zu berechnen,

wodurch jede Komplexausgabe einen Amplitudenschätzwert und einen Phasenschätzwert darstellt,

eine Betriebseinheit (209), die dafür konfiguriert ist, eine Geschwindigkeit oder eine Empfangswinkelfrequenz zu berechnen, bei der die Differenz der Leistungsschätzwerte oder Amplitudenschätzwerte für die Anzahl von Referenzwinkelfrequenzen basierend auf den Komplexausgaben für die Anzahl der Referenzwinkelfrequenzen gleich oder kleiner als ein Grenzwert wird,

eine Geschwindigkeitsschätzeinheit (212), die dafür konfiguriert ist, die Geschwindigkeit, bei der die Differenz gleich oder kleiner als der Grenzwert wird, als eine Geschwindigkeit des Senders oder des Empfängers zu schätzen, und

eine Abstandsschätzeinheit (211, 213), die dafür konfiguriert ist, jeden Phasenschätzwert der mehreren Frequenzsignale aus den Komplexausgaben für die Anzahl der Referenzwinkelfrequenzen zu extrahieren, wenn die Differenz gleich oder kleiner als der Grenzwert wird, um basierend auf jedem extrahierten Phasenschätzwert eine Laufzeitverzögerung des zusammengesetzten Frequenzsignals zwischen dem Sender und dem Empfänger zu berechnen, und basierend auf der berechneten Laufzeitverzögerung den Abstand zwischen dem Sender und dem Empfänger zu schätzen.

6. Geschwindigkeits-/Abstandserkennungsvorrichtung nach Anspruch 5, ferner eine Zeitsynchronisationseinheit umfassend, die mit Hilfe eines festgelegten Zeitsynchronisationsverfahrens eine innere Uhr mit der des Senders synchronisiert.

7. Geschwindigkeits-/Abstandserkennungsvorrichtung nach Anspruch 5, wobei die Betriebseinheit beim Berechnen der Geschwindigkeit oder der empfangenen Winkelfrequenz, bei der die Differenz in Leistungsschätzwerten oder Amplitudenschätzwerten für die Anzahl der Referenzwinkelfrequenzen zur Zielpräzision wird, eine Korrektur addiert, die einer Frequenzcharakteristik eines Empfangselements und einem Geschwindigkeitsbereich des Senders entspricht.

8. Geschwindigkeits-/Abstandserkennungsvorrichtung nach Anspruch 5, wobei die Empfangseinheit dafür konfiguriert ist, eine Signalausgabe vom Sender in Form eines von einer Ultraschallwelle, einer elektromagnetischen Welle oder modulierten Lichts zu empfangen.

9. Geschwindigkeits-/Abstandserkennungsverfahren, ausgeführt von einer Geschwindigkeits-/Abstandserkennungsvorrichtung (3), die eine Signalausgabe von einem Sender (2) empfängt, um den Abstand zwischen dem Sender und der Vorrichtung selbst zu erkennen, wobei der Sender basierend auf mehreren Frequenzsignalen einen Referenzzeitpunkt bestimmt, zu dem sich entsprechende Phasen der mehreren Frequenzsignale in einem festgelegten Verhältnis befinden, und ein zusammengesetztes Frequenzsignal sendet, das durch Kombinieren der mehreren Frequenzsignale erzielt wird, nachdem die entsprechenden Phasen der mehreren Frequenzsignale basierend auf dem bestimmten Referenzzeitpunkt justiert wurden, wobei das Verfahren Folgendes umfasst:

Empfangen des vom Sender gesendeten zusammengesetzten Frequenzsignals,

Ausführen einer Quadraturerkennung des empfangenen zusammengesetzten Frequenzsignals mit einem Dopplereffekt und einer Laufzeitverzögerung durch Referenzwinkelfrequenzen von mindestens der gleichen Anzahl wie die der mehreren Frequenzsignale und Berechnen von Komplexausgaben für eine Anzahl von Referenzwinkelfrequenzen basierend auf deren Erkennung,

wodurch jede Komplexausgabe einen Amplitudenschätzwert und einen Phasenschätzwert darstellt,

Berechnen einer Geschwindigkeit oder einer Empfangswinkelfrequenz, bei der die Differenz der Leistungsschätzwerte oder Amplitudenschätzwerte für die Anzahl von Referenzwinkelfrequenzen basierend auf den Komplexausgaben für die Anzahl der Referenzwinkelfrequenzen gleich oder kleiner als ein Grenzwert wird,

Schätzen der Geschwindigkeit, bei der die Differenz gleich oder kleiner als der Grenzwert wird, als eine Geschwindigkeit des Senders oder des Empfängers, und

Extrahieren jedes Phasenschätzwertes der mehreren Frequenzsignale aus den Komplexausgaben für die Anzahl der Referenzwinkelfrequenzen, wenn die Differenz gleich oder kleiner als der Grenzwert wird, Berechnen einer Laufzeitverzögerung des zusammengesetzten Frequenzsignals zwischen dem Sender und dem Empfänger basierend auf jedem extrahierten Phasenschätzwert

und Schätzen des Abstandes zwischen dem Sender und dem Empfänger, basierend auf der berechneten Laufzeitverzögerung.

**Revendications**

1. Système de détection de vitesse/distance (1) qui comprend un émetteur (2) et un récepteur (3) et qui est configuré pour détecter une distance entre l'émetteur et le récepteur, dans lequel

   l'émetteur est configuré pour déterminer un point de référence temporelle auquel les phases respectives de plusieurs signaux de fréquence sont dans une relation prédéterminée sur la base de la pluralité de signaux de fréquence, et pour émettre un signal de fréquence composite obtenu en combinant la pluralité de signaux de fréquence après que les phases respectives de la pluralité de signaux de fréquence ont été ajustées sur la base du point de référence temporelle déterminé, et

   le récepteur comprend :

   une unité de réception (201, 202, 203, 204, 205) configurée pour recevoir le signal de fréquence composite émis par l'émetteur,
   une unité de calcul de sortie complexe (206, 207A, 207B, 208A, 208B) configurée pour effectuer une détection en quadrature du signal de fréquence composite reçu par l'unité de réception avec un effet Doppler et un retard de propagation par des pulsations de référence en au moins le même nombre que celui de la pluralité de signaux de fréquence, et pour calculer des sorties complexes pour un nombre des pulsations de référence sur la base d'une sortie de détection de celle-ci,
   moyennant quoi chaque sortie complexe représente une valeur d'estimation d'amplitude et une valeur d'estimation de phase,
   une unité d'opération (209) configurée pour calculer une vitesse ou une pulsation de réception à laquelle la différence des valeurs d'estimation de puissance ou des valeurs d'estimation d'amplitude pour le nombre de pulsations de référence basées sur les sorties complexes pour le nombre de pulsations de référence devient inférieure ou égale à un seuil,
   une unité d'estimation de vitesse (212) configurée pour estimer la vitesse lorsque la différence devient inférieure ou égale au seuil en tant que vitesse de l'émetteur ou du récepteur, et
   une unité d'estimation de distance (211, 213) configurée pour extraire chaque valeur d'estimation de phase de la pluralité de signaux de fréquence des sorties complexes pour le nombre de pulsations de référence lorsque la différence devient inférieure ou égale au seuil, pour calculer un temps de retard de propagation du signal de fréquence composite entre l'émetteur et le récepteur sur la base de chaque valeur d'estimation de phase extraite, et pour estimer la distance entre l'émetteur et le récepteur sur la base du temps de retard de propagation calculé.

2. Système de détection de vitesse/distance selon la revendication 1, dans lequel l'émetteur et le récepteur synchronisent leurs horloges internes à l'avance en utilisant un procédé de synchronisation temporelle prédéterminé.

3. Système de détection de vitesse/distance selon la revendication 1, dans lequel, lors du calcul de la vitesse ou de la pulsation reçue à laquelle la différence des valeurs d'estimation de puissance ou des valeurs d'estimation d'amplitude pour le nombre de pulsations de référence atteint une précision cible, l'unité d'opération ajoute une correction correspondant à une caractéristique fréquentielle d'un élément de réception et à une plage de vitesse de l'émetteur.

4. Système de détection de vitesse/distance selon la revendication 1, dans lequel l'unité de réception est configurée pour recevoir un signal délivré par l'émetteur sous la forme de l'une quelconque d'une onde ultrasonore, d'une onde électromagnétique et d'une lumière modulée.

5. Appareil de détection de vitesse/distance (3) configuré pour recevoir un signal délivré par un émetteur (2) pour détecter la distance entre l'émetteur et l'appareil lui-même, l'émetteur étant configuré pour déterminer un point de référence temporelle auquel les phases respectives de plusieurs signaux de fréquence sont dans une relation prédéterminée sur la base de la pluralité de signaux de fréquence, et pour émettre un signal de fréquence composite obtenu en combinant la pluralité de signaux de fréquence après que les phases respectives de la pluralité de signaux de fréquence ont été ajustées sur la base du point de référence temporelle déterminé ; l'appareil de détection de vitesse/distance comprenant :

   une unité de réception (201, 202, 203, 204, 205) configurée pour recevoir le signal de fréquence composite émis par l'émetteur,
   une unité de calcul de sortie complexe (206, 207A, 207B, 208A, 208B) configurée pour effectuer une détection en quadrature du signal de fréquence composite reçu par l'unité de réception avec un effet Doppler et un retard de propagation par les pulsations de référence en au moins un même nombre que celui de la pluralité de signaux de fréquence, et pour calculer des sorties complexes pour un nombre des pulsations de référence sur la base d'une sortie de détection de celle-ci,

moyennant quoi chaque sortie complexe représente une valeur d'estimation d'amplitude et une valeur d'estimation de phase,

une unité d'opération (209) configurée pour calculer une vitesse ou une pulsation de réception à laquelle la différence des valeurs d'estimation de puissance ou des valeurs d'estimation d'amplitude pour le nombre de pulsations de référence basées sur les sorties complexes pour le nombre de pulsations de référence devient inférieure ou égale à un seuil,

une unité d'estimation de vitesse (212) configurée pour estimer la vitesse lorsque la différence devient inférieure ou égale au seuil en tant que vitesse de l'émetteur ou du récepteur, et

une unité d'estimation de distance (211, 213) configurée pour extraire chaque valeur d'estimation de phase de la pluralité de signaux de fréquence des sorties complexes pour le nombre de pulsations de référence lorsque la différence devient inférieure ou égale au seuil, pour calculer un temps de retard de propagation du signal de fréquence composite entre l'émetteur et le récepteur sur la base de chaque valeur d'estimation de phase extraite, et pour estimer la distance entre l'émetteur et le récepteur sur la base du temps de retard de propagation calculé.

6. Appareil de détection de vitesse/distance selon la revendication 5, comprenant en outre une unité de synchronisation temporelle qui synchronise une horloge interne avec celle de l'émetteur en utilisant un procédé de synchronisation temporelle prédéterminé.

7. Appareil de détection de vitesse/distance selon la revendication 5, dans lequel, lors du calcul de la vitesse ou de la pulsation reçue à laquelle la différence des valeurs d'estimation de puissance ou des valeurs d'estimation d'amplitude pour le nombre de pulsations de référence atteint une précision cible, l'unité d'opération ajoute une correction correspondant à une caractéristique fréquentielle d'un élément de réception et à une plage de vitesse de l'émetteur.

8. Appareil de détection de vitesse/distance selon la revendication 5, dans lequel l'unité de réception est configurée pour recevoir un signal délivré par l'émetteur sous la forme de l'une quelconque d'une onde ultrasonore, d'une onde électromagnétique et d'une lumière modulée.

9. Procédé de détection de vitesse/distance effectué par un appareil de détection de vitesse/distance (3) qui reçoit un signal délivré par un émetteur (2) pour détecter la distance entre l'émetteur et l'appareil lui-même, dans lequel l'émetteur détermine un point de référence temporelle auquel les phases respectives de plusieurs signaux de fréquence sont dans une relation prédéterminée sur la base de la pluralité de signaux de fréquence, et émet un signal de fréquence composite obtenu en combinant la pluralité de signaux de fréquence après que les phases respectives des signaux de fréquence ont été ajustées sur la base du point de référence temporelle déterminé, le procédé comprenant :

la réception du signal de fréquence composite émis par l'émetteur ;

l'exécution d'une détection en quadrature du signal de fréquence composite tel que reçu avec un effet Doppler et un retard de propagation par des pulsations de référence en au moins le même nombre que celui de la pluralité de signaux de fréquence et le calcul de sorties complexes pour un nombre des pulsations de référence sur la base de la détection, moyennant quoi chaque sortie complexe représente une valeur d'estimation d'amplitude et une valeur d'estimation de phase,

le calcul d'une vitesse ou d'une pulsation de réception à laquelle la différence des valeurs d'estimation de puissance ou des valeurs d'estimation d'amplitude pour le nombre de pulsations de référence basées sur les sorties complexes pour le nombre de pulsations de référence devient inférieure ou égale à un seuil,

l'estimation de la vitesse lorsque la différence devient inférieure ou égale au seuil en tant que vitesse de l'émetteur ou du récepteur, et

l'extraction de chaque valeur d'estimation de phase de la pluralité de signaux de fréquence des sorties complexes pour le nombre de pulsations de référence lorsque la différence devient inférieure ou égale au seuil, le calcul d'un temps de retard de propagation du signal de fréquence composite entre l'émetteur et le récepteur sur la base de chaque valeur d'estimation de phase extraite,

et l'estimation de la distance entre l'émetteur et le récepteur sur la base du temps de retard de propagation calculé.

# FIG.1

MEASURING SYSTEM

1

TRANSMITTER

2

RECEIVER

3

ULTRASONIC
WAVE

DISTANCE L

VELOCITY
VECTOR $\vec{v}$

TIME SYNCHRONIZATION

# FIG.2

```
┌─────────────┐
│    START    │
└─────────────┘
        │
        ▼
┌─────────────────────────────────────────────────────────┐
│ SYNCHRONIZE CLOCKS (TIMES) OF TRANSMITTER AND            │ ～S1
│ RECEIVER IN ADVANCE                                      │
└─────────────────────────────────────────────────────────┘
        │
        ▼
┌─────────────────────────────────────────────────────────┐
│ OUTPUT ULTRASONIC WAVE OF COMPOSITE FREQUENCY            │ ～S2
│ BEAT SIGNAL BY TRANSMITTER AT GIVEN TIME                 │
└─────────────────────────────────────────────────────────┘
        │
        ▼
┌─────────────────────────────────────────────────────────┐
│ RECEIVE ULTRASONIC WAVE BY RECEIVER                      │ ～S3
└─────────────────────────────────────────────────────────┘
        │
        ▼
┌─────────────────────────────────────────────────────────┐
│ PERFORM QUADRATURE DETECTION OF RECEIVED SIGNAL          │
│ RECEIVED WITH PROPAGATION DELAY AND DOPPLER SHIFT        │
│ BY TWO DIFFERENT REFERENCE ANGULAR FREQUENCIES $\Omega_A$ │ ～S4
│ AND $\Omega_B$ TO OBTAIN DETECTION OUTPUTS $(I_A, Q_A)$ AND $(I_B, Q_B)$ │
└─────────────────────────────────────────────────────────┘
        │
        ▼
┌─────────────────────────────────────────────────────────┐
│ CALCULATE COMPLEX OUTPUTS (ESTIMATION AMOUNT OF          │
│ AMPLITUDE AND PHASE) $a_p\exp(j\phi_p)$ AND $a_q\exp(j\phi_q)$ BASED ON │ ～S5
│ DETECTION OUTPUTS $(I_A, Q_A)$ AND $(I_B, Q_B)$          │
└─────────────────────────────────────────────────────────┘
        │
        ▼
┌─────────────────────────────────────────────────────────┐
│ CALCULATE v SO THAT $P(\omega_p(v), \omega_q(v))=a_p(\omega_p, \omega_q)^2-\eta^2 a_q(\omega_p, \omega_q)^2$ │ ～S6
│ BECOMES TARGET PRECISION (DESIRABLY, "0")               │
└─────────────────────────────────────────────────────────┘
        │
        ▼
┌─────────────────────────────────────────────────────────┐
│ WHEN SIMULTANEOUS ESTIMATION OF VELOCITY $V_r$           │
│ AND DISTANCE L                                           │
│ $P(\omega_p(v), \omega_q(v))=a_p(\omega_p, \omega_q)^2-\eta^2 \times a_q(\omega_p, \omega_q)^2$ BECOMES TARGET │
│ PRECISION, v AT THAT TIME IS ESTIMATED AS VELOCITY $v_r$, │ ～S7
│ PHASE PORTIONS $\phi_p$, $\phi_q$ OF COMPLEX OUTPUTS AT THAT │
│ TIME ARE EXTRACTED, PROPAGATION DELAY TIME              │
│ $d=-(\phi_p-\phi_q)/(\omega_p-\omega_q)$ IS ESTIMATED, TO ESTIMATE DISTANCE │
│ $L=d \times c$                                          │
└─────────────────────────────────────────────────────────┘
        │
        ▼
┌─────────────┐
│     END     │
└─────────────┘
```

# FIG.3

a:  f1

b:  f2

c:  f1+f2
    (sync pattern)

d:  $\phi 1$

e:  $\phi 2$

f:  $\phi 2$-$\phi 1$

TIME REFERENCE POINT

# FIG.4

BEAT

T

$$S(t)=a_1\sin(\omega_1 t+\phi_1)+a_2\sin(\omega_2 t+\phi_2)$$

TRANSMISSION ANGULAR FREQUENCY $\omega_1 + \omega_2$
RECEPTION ANGULAR FREQUENCY $\omega_p + \omega_q$

# FIG.5

RECEIVED POWER [W]

$a_p(\omega_p(v),\ \omega_q(v))^2$

$a_q(\omega_p(v),\ \omega_q(v))^2$

$\eta^2 \times a_q(\omega_p(v),\ \omega_q(v))^2$

v [m/s]

# FIG.6A

# FIG.6B

# FIG.7A

# FIG.7B

# FIG.8A

IGNORE DOPPLER
EFFECT

# FIG.8B

COMPENSATE DOPPLER
EFFECT

# FIG.9

TRANSMITTER
2

```
WAVEFORM          D/A          AMPLI-
STORING UNIT  ──  CON-    ──   FYING         ┤├  ◁
   101            VERTER       UNIT          104
                  102          103
                    │
                    │
SYNCHRO-    TIME              │
NIZATION  ─ SYNCHRO- ──── LOCAL CLOCK
INPUT       NIZING           106
            MECHANISM
            105
```

# FIG.10

RECEIVER 3

# FIG.11A

START

↓ S41

ASSUME SOUND VELOCITY

↓ S42

SET LOWER LIMIT $v_1$ AND UPPER LIMIT $v_2$ OF DETECTION VELOCITY

B →

↓ S43

$|v_1-v_2| \leq$ TARGET PRECISION?

YES → S52

OUTPUT $v_r=v_1$ OR $v_r=v_2$

↓

END

NO ↓ S44

$v_3 \leftarrow (v_1+v_2)/2$

↓ S45

$$(\omega_{p1}, \omega_{q1}) = \frac{c}{c-v_1}(\omega_a, \omega_b)$$

$$(\omega_{p2}, \omega_{q2}) = \frac{c}{c-v_2}(\omega_a, \omega_b)$$

$$(\omega_{p3}, \omega_{q3}) = \frac{c}{c-v_3}(\omega_a, \omega_b)$$

↓ S46

ESTIMATE AMPLITUDES
$a_A(\omega_{p1}, \omega_{q1})$, $a_B(\omega_{p1}, \omega_{q1})$
$a_A(\omega_{p2}, \omega_{q2})$, $a_B(\omega_{p2}, \omega_{q2})$
$a_A(\omega_{p3}, \omega_{q3})$, $a_B(\omega_{p3}, \omega_{q3})$

↓

A

# FIG.11B

# FIG.12A

MOVING
OBJECT
4

2

ULTRASONIC
WAVE

VELOCITY
VECTOR $\vec{v}$

3

VELOCITY
MEASUREMENT

v=1.0m/s

# FIG.12B

2

ULTRASONIC
WAVE

VELOCITY
VECTOR $\vec{v}$

4
MOVING
OBJECT

3

3

3

VELOCITY
MEASUREMENT

vx=1.1m/s
vy=0.1m/s
vz=0.1m/s

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009272707 A
- WO 2006112475 A
- JP 2007528168 A
- JP 4041899 B

### Non-patent literature cited in the description

- **SATO TETSUYA ; SUGIMOTO MASANORI ; HASHIZUME HIROMICHI.** An Extension Method of Phase Accordance Method for Accurate Ultrasonic Localization of Moving Node. *IEICE Transactions,* December 2009, vol. J92-A (12